# EUROPÄISCHE PATENTSCHRIFT

(11) **EP 4 526 743 B1**
(45) Veröffentlichungstag und Bekanntmachung des Hinweises auf die Patenterteilung: **18.03.2026**
(21) Anmeldenummer: 23729017.6
(22) Anmeldetag: 17.05.2023
(51) Int. Cl.: G05B 19/042

(54) **VERFAHREN ZUM EINRICHTEN UND/ODER BETREIBEN EINER VORRICHTUNG UND VORRICHTUNG, DIE DAZU EINGERICHTET IST, EIN SOLCHES VERFAHREN AUSZUFÜHREN**
METHOD FOR SETTING UP AND/OR OPERATING A DEVICE AND DEVICE DESIGNED TO CARRY OUT SUCH A METHOD
PROCÉDÉ DE MISE EN PLACE ET/OU DE FONCTIONNEMENT D'UN DISPOSITIF ET DISPOSITIF CONÇU POUR METTRE EN OEUVRE UN TEL PROCÉDÉ

(30) Priorität: 18.05.2022 DE 102022112454
(43) Veröffentlichungstag der Anmeldung: 26.03.2025
(73) Patentinhaber: Qlar Europe GmbH, 64293 Darmstadt (DE)
(72) Erfinder: DE JONG, Herman, 64293 Darmstadt (DE); WUCHER, Frank, 64293 Darmstadt (DE)
(86) Internationale Anmeldenummer: PCT/EP2023/063207
(87) Internationale Veröffentlichungsnummer: WO 2023/222739

(56) Entgegenhaltungen:
- EP-A1- 3 162 959
- DE-T2- 60 133 378
- US-A1- 2009 309 730

## Beschreibung

### Gebiet der Technik

Die vorliegende Erfindung betrifft ein Verfahren zum Einrichten und/oder Betreiben einer Vorrichtung sowie eine Vorrichtung, die dazu eingerichtet ist, ein solches Verfahren auszuführen.

### Stand der Technik

Förder-, Mess-, Wäge-, Mahl-, Misch-, Filter-, Sieb-, Trocken- sowie Dosiervorrichtungen für Schüttgut sind aus dem Stand der Technik bekannt. Allerdings stellt es sich als aufwändig und fehleranfällig heraus, wenn eine solche Vorrichtung im Wechsel mit mehreren unterschiedlichen Förder-, Austrags-, Mahl-, Misch-, Filter-, Sieb-, Trocken- und/oder Messorganen als Betriebselemente betrieben werden soll.

Aus der EP 3 162 959 A1 ist ein Verfahren zum Betrieb einer Fräsmaschine mit austauschbaren Fräswalzen bekannt, die mit einem Transponder ausgestattet sind, der Daten zur Kennzeichnung der einzelnen Fräswalzen aufweist. Anhand der auslesbaren Daten können die Betriebsparameter der Fräsmaschine vorgegeben werden.

Auch die DE 601 33 378 T2 zeigt ein Verfahren zum Überwachen und Regeln eines Herstellprozesses, bei welchem die Komponenten, die im Prozess verarbeitet werden mit einem Transponder versehen sind. Es sind im Herstellprozess and verschiedensten Positionen Kommunikationseinrichtungen zum Datenaustausch mit dem Transponder vorgesehen, um auf dem Transponder gespeicherte Informationen auszulesen oder Prozessdaten auf die Transponder zu schreiben.

Weiterhin offenbart die US 2009/0309730 A1 ein Verfahren zur Überwachung von Druckergeräten, die mit Transpondern versehen sind, auf welchen Informationen und Zustandsdaten gespeichert und ausgelesen werden können.

### Zusammenfassung der Erfindung

Es ist daher Aufgabe der vorliegenden Erfindung, die beschriebenen Nachteile des Stands der Technik zu überwinden und insbesondere Mittel anzugeben, mit denen Förder-, Mess-, Wäge-, Mahl-, Misch-, Filter-, Sieb-, Trocken- und/oder Dosiervorrichtungen für Schüttgut auf einfache und günstige aber dennoch sichere Weise im Wechsel mit mehreren unterschiedlichen Förder-, Austrags-, Mahl-, Misch-, Filter-, Sieb-, Trocken- und/oder Messorganen betrieben werden können.

Die Aufgabe wird durch die Erfindung gemäß Patentanspruch 1 gelöst. Gemäß einem ersten Aspekt wird ein Verfahren zum Einrichten und/oder Betreiben einer Förder-, Mess-, Wäge-, Mahl-, Misch-, Filter-, Sieb-, Trocken- und/oder Dosiervorrichtung für Schüttgut bereitgestellt, die zumindest ein austauschbares Betriebselement, insbesondere in Form eines Förder-, Austrags-, Mahl-, Misch-, Filter-, Sieb-, Trocken- und/oder Messorgans, mit zumindest einem Transponder und zumindest eine Kommunikationseinrichtung zum Datenaustausch mit dem Transponder aufweist,
wobei, mittels der Kommunikationseinrichtung, zumindest ein auf dem Transponder gespeichertes erstes Datum ausgelesen wird, und
wobei zumindest ein zweites Datum, insbesondere basierend auf zumindest dem ersten Datum, ermittelt und, mittels der Kommunikationseinrichtung, auf dem Transponder gespeichert wird, wobei das zweite Datum einen Betriebsfähigkeitszustand oder ein Maß dafür des Betriebselements repräsentiert, vorgeschlagen wird.

Der Erfindung liegt damit die überraschende Erkenntnis zugrunde, dass ein Betrieb einer solchen Vorrichtung besonders sicher gestaltet werden kann, indem Daten zum aktuellen Betriebsfähigkeitszustand eines Betriebselements und Daten, basierend auf denen eine Änderung des Betriebsfähigkeitszustandes des Betriebselements ermittelt werden kann, beide zentral an dem jeweiligen Betriebselement vorgesehen werden. Auf diese Weise liegen zusammen mit dem jeweiligen Betriebselement auch stets dessen aktueller Betriebsfähigkeitszustand vor. Abhängig von dem Betriebsfähigkeitszustand kann der Betrieb der Vorrichtung dann beispielsweise passend eingestellt und kontrolliert werden. Außerdem kann eine Veränderung der Betriebsfähigkeit des Betriebselements so besonders leicht ermittelt und etwa für die zukünftigen Nutzungen auf dem Transponder gespeichert werden.

Durch den zentralen Speicherort an dem Betriebselement kann ein Betriebselement sogar in mehreren unterschiedlichen Vorrichtungen eingesetzt werden, ohne dass diese Vorrichtungen untereinander vernetzt sein oder auf eine gemeinsame Datenbasis zugreifen müssen. Dadurch wird eine hohe Flexibilität bei gleichzeitig hoher Betriebssicherheit erreicht.

Indem die Daten in einem Transponder gespeichert sind, sind die Informationen zudem berührungslos auslesbar und speicherbar. Das macht die Anwendung des Verfahrens besonders einfach, da die relative Positionierung von Transponder und Kommunikationseinrichtung zueinander vergleichsweise frei erfolgen kann. Ferner können dadurch auch bestehende Vorrichtungen leicht für den Einsatz des vorgeschlagenen Verfahrens nachgerüstet werden.

Zudem ist ein Transponder günstig und die zugehörige Lese- und/oder Schreibtechnik mit einfachen und kommerziell gut erhältlichen Mitteln innerhalb der Kommunikationseinrichtung realisierbar. Dadurch können die mit dem Verfahren verbundenen Kosten geringgehalten werden.

In einer Ausführungsform ist die Kommunikationseinrichtung ruhend und/oder ortsfest an der Vorrichtung angeordnet.

In einer Ausführungsform ist die Kommunikationseinrichtung innerhalb eines mobilen Handgerätes, wie einem Smartphone, vorgesehen oder als ein solches ausgebildet.

Vorzugsweise ist der Transponder an und/oder in dem Betriebselement, insbesondere dauerhaft, angeordnet oder anordenbar. Beispielsweise kann der Transponder mittels einer stoffschlüssigen Verbindung mit dem Betriebselement verbunden, insbesondere an das Betriebselement geklebt, sein.

Vorzugsweise wird der Transponder zu Beginn initialisiert, indem das erste Datum mit einem definierten Wert in dem Transponder gespeichert wird und/oder indem das zweite Datum mit einem initialen Betriebsfähigkeitszustandswert oder eines Maßes dafür, etwa null, in dem Transponder gespeichert wird.

Die Kommunikationseinrichtung und/oder der Transponder kann bzw. können dazu eingerichtet sein, dass die Kommunikationseinrichtung, insbesondere berührungsfrei, Daten aus dem Transponder auslesen und/oder Daten auf dem Transponder speichern kann. Die Kommunikationseinrichtung kann beispielsweise ein Lese- und/oder Schreibgerät aufweisen, um Daten aus dem Transponder auslesen und/oder Daten auf dem Transponder speichern zu können.

Die Kommunikationseinrichtung kann beispielsweise in Software, in Hardware oder einer Kombination von beidem realisiert sein. Die Kommunikationseinrichtung kann alternativ oder ergänzend einen Speicher, einen Prozessor, eine Empfangseinrichtung, eine Sendeeinrichtung oder eine beliebige Kombination davon aufweisen. Die Kommunikationseinrichtung kann alternativ oder ergänzend alles, was von ihr aufgewiesen ist, wie insbesondere alle dafür notwendigen Ressourcen, beispielsweise in Form von Software- und/oder Hardwareressourcen, bereitstellen und/oder verfügbar machen und/oder aufweisen.

Vorzugsweise wird das Ermitteln des zweiten Datums ganz oder teilweise mittels einer Recheneinheit durchgeführt. Die Recheneinheit kann vorteilhafterweise für die Durchführung aller oder einzelner hierin beschriebener Verfahrensschritte verwendet werden, insbesondere jeweils dazu eingerichtet sein diese Schritte auszuführen, sofern aus dem Zusammenhang nichts anderes ersichtlich ist. Die Recheneinheit kann beispielsweise in Software, in Hardware oder einer Kombination von beidem realisiert sein. Die Recheneinheit kann alternativ oder ergänzend einen Speicher, einen Prozessor, eine Empfangseinrichtung, eine Sendeeinrichtung oder eine beliebige Kombination davon aufweisen. Die Recheneinheit kann alternativ oder ergänzend alles, was von ihr aufgewiesen ist, wie insbesondere alle dafür notwendigen Ressourcen, beispielsweise in Form von Software- und/oder Hardwareressourcen, bereitstellen und/oder verfügbar machen und/oder aufweisen.

Vorzugsweise ist das Schüttgut ein pulvriges, körniges oder stückiges Gemenge, das in einer schüttfähigen Form vorliegt.

Beispiele für ein vorteilhaftes Schüttgut sind Gestein, Baumaterial, insbesondere Oberboden, Sand, Kies und/oder Zement, Rohstoffe, insbesondere Erz, Kohle, Ton und/oder Streusalz, Lebensmittel, insbesondere Getreide, Zucker, Salz, Kaffee und/oder Mehl, und/oder Pulverförmige Güter, insbesondere Pigmente, Füllstoffe, Granulate und/oder Pellets.

Die Fördervorrichtung kann beispielsweise ein Transport-, Platten- und/oder Förderband sein oder aufweisen.

Die Messvorrichtung kann beispielsweise eine Waage, wie insbesondere eine Transportband- und/oder Förderbandwaage, und/oder ein Coriolis-Messgerät sein oder aufweisen.

Die Wägevorrichtung kann beispielsweise eine Waage, wie insbesondere eine Transportband- und/oder Förderbandwaage, und/oder ein Wägebehälter sein oder aufweisen.

Die Mahlvorrichtung kann beispielsweise eine Mühle sein oder aufweisen.

Die Mischvorrichtung kann beispielsweise ein Mischer sein oder aufweisen.

Die Filtervorrichtung kann beispielsweise eine Filteranlage sein oder aufweisen.

Die Siebvorrichtung kann beispielsweise eine Siebmaschine sein oder aufweisen.

Die Trockenvorrichtung kann beispielsweise eine Wärmebehandlungsmaschine, ein Rotationskalzinator, ein Drehrohrofen, und/oder ein Rotationskühler sein oder aufweisen.

Die Dosiervorrichtung kann beispielsweise eine Differentialdosierwaage, eine Dosierbandwaage, ein Dosierplattenband, ein Coriolis-Messgerät, insbesondere mit vorgeschaltetem Zuteiler, ein Vibrationsrinnendosierer und/oder eine Zellradschleuse sein oder aufweisen.

Vorteilhafterweise weist die Fördervorrichtung ein Förder-, Austrags- und/oder Messorgan als Betriebselement auf.

Vorteilhafterweise weist die Messvorrichtung ein Förder-, Austrags-, und/oder Messorgan als Betriebselement auf.

Vorteilhafterweise weist die Wägevorrichtung ein Förder-, Austrags-, und/oder Messorgan als Betriebselement auf.

Vorteilhafterweise weist die Mahlvorrichtung ein Mahlorgan als Betriebselement auf.

Vorteilhafterweise weist die Mischvorrichtung ein Mischorgan als Betriebselement auf.

Vorteilhafterweise weist die Filtervorrichtung ein Filterorgan als Betriebselement auf.

Vorteilhafterweise weist die Siebvorrichtung ein Sieborgan als Betriebselement auf.

Vorteilhafterweise weist die Trockenvorrichtung ein Trockenorgan als Betriebselement auf.

Vorteilhafterweise weist die Dosiervorrichtung ein Förder-, Austrags- und/oder Messorgan als Betriebselement auf.

Vorzugsweise ist das austauschbare Betriebselement ein Verschleißteil der Vorrichtung.

Vorzugsweise ist das Betriebselement dazu geeignet und/oder dazu ausgelegt, beim Ausführen einer Bewegung, insbesondere einer Drehbewegung, vorzugsweise mit einer definierten oder definierbaren Bewegungsfrequenz, eine Bewegung des Schüttguts entlang einer definierten oder definierbaren Bewegungsrichtung, insbesondere entlang einer Längsachse des Betriebselements, innerhalb der Vorrichtung zu erzwingen.

Vorzugsweise ist der Betriebsfähigkeitszustand (oder ein Maß dafür) des Betriebselements ein Verschleißzustand (oder ein Maß dafür) des Betriebselements und/oder ein Zustand (oder ein Maß dafür) des Betriebselements in Bezug auf die Förder-, Mess-, Wäge-, Mahl-, Misch-, Filter-, Sieb-, Trocken- und/oder Dosierfähigkeit des Betriebselements. Beispielsweise kann eine Förderschnecke mit Schüttgut zugesetzt sein, so dass das Kammervolumen der Förderschnecke reduziert ist. Beispielsweise kann eine Förderschnecke auch abgenutzt sein durch Verschleiß. In beiden dieser exemplarischen Fälle kann daraufhin jeweils die Förderfähigkeit der Förderschnecke abnehmen, also weniger Schüttgut pro Umdrehung durch sie gefördert werden.

Vorzugseise wird unter einem Datum eine, vorzugsweise digitale, Repräsentation einer Information verstanden.

Alternativ oder ergänzend kann bei dem Verfahren gemäß dem ersten Aspekt auch vorgesehen sein, dass zumindest ein Betriebsparameter der Vorrichtung ein spezifischer Betriebsparameter ist und ein während einem Betrieb der Vorrichtung einzustellender Wert des spezifischen Betriebsparameters als ein spezifischer Wert zumindest teilweise basierend auf dem ersten Datum ermittelt wird oder das erste Datum als ein solcher spezifischer Wert des spezifischen Betriebsparameters verwendet wird
und wobei vorzugsweise (i) der spezifische Betriebsparameter der Vorrichtung auf den spezifischen Wert eingestellt wird, und/oder (ii) das zweite Datum zumindest teilweise basierend auf dem spezifischen Wert und/oder dem spezifischen Betriebsparameter ermittelt wird.

Dadurch können für jedes Betriebselement ein individueller spezifischer Wert bzw. zweites Datum vorgegeben werden. Dadurch kann die Vorrichtung besonders zuverlässig und sicher mit dem jeweiligen Betriebselement betrieben werden.

Indem das erste Datum dazu eingesetzt wird, das zweite Datum, also den neuen Betriebsfähigkeitszustand, zu ermitteln, kann die Betriebsfähigkeit zuverlässiger ermittelt werden, da für jedes Betriebselement eine individuelle Betriebsfähigkeitsänderung ermittelt werden kann. Somit können unterschiedliche Betriebsfähigkeitseigenschaften von verschiedenen Betriebselemente berücksichtigt werden. Somit ist die im zweiten Datum gespeicherte Information zur Betriebsfähigkeit des Betriebselement besonders zuverlässig.

Indem das erste Datum als spezifischer Wert verwendet wird, bringt das Betriebselement gewissermaßen die notwendige Information für die Einstellung des spezifischen Betriebsparameters bereits mit. Dies ist besonders effizient.

Vorzugsweise bezieht sich der spezifische Betriebsparameter auf einen Betriebsparameter, der eine Einstellung des Betriebselements während des Betriebs der Vorrichtung betrifft.

Das erste Datum kann beispielsweise eine Spezifikation des spezifischen Betriebsparameters aufweisen oder darstellen oder es kann eine solche Spezifikation basierend auf dem ersten Datum ermittelt, insbesondere aus einem Speicher abgerufen, werden. Basierend zumindest teilweise darauf kann dann der spezifische Wert vorteilhafterweise ermittelt werden.

Auf diese Weise kann beispielsweise eine volumetrische Kennlinie des Betriebselements und/oder die Nennförderstärke des Betriebselements ermittelt werden, optional jeweils unter weiterer Einbeziehung von Informationen zu dem Schüttgut.

Vorzugsweise wird das Ermitteln des spezifischen Wertes und/oder das Einstellen des spezifischen Betriebsparameters auf den spezifischen Wert ganz oder teilweise mittels der Recheneinheit durchgeführt.

Alternativ oder ergänzend kann bei dem Verfahren gemäß dem ersten Aspekt auch vorgesehen sein, dass der spezifische Wert zumindest teilweise auch basierend auf einem zuvor, insbesondere als letztes, auf dem Transponder gespeicherten zweiten Datum ermittelt wird, wobei vorzugsweise basierend auf dem zuvor auf dem Transponder gespeicherten zweiten Datum ein, insbesondere oberer, Grenzwert des Wertebereichs des spezifischen Wertes ermittelt und bei der Ermittlung des spezifischen Wertes berücksichtigt wird.

Indem der Betriebsfähigkeitszustand oder ein Maß dafür des jeweiligen Betriebselements berücksichtigt wird, kann vorteilhafterweise eine individuelle Anpassung des spezifischen Wertes an das jeweilige Betriebselement erfolgen.

Dadurch kann beispielsweise der spezifische Wert betriebsfähigkeitsabhängig gewählt werden. Der Parameterwert kann also etwa bei höherer Betriebsfähigkeit anders gewählt werden als bei geringer Betriebsfähigkeit. Dies ist beispielsweise besonders vorteilhaft, wenn der Parameter eine Drehzahl des Betriebselements ist. Bei geringerer Betriebsfähigkeit, etwa aufgrund eines höheren Verschleißes, kann die Drehzahl dann reduziert werden.

Vorzugsweise kann der Grenzwert aber auch ein unterer Grenzwert des Wertebereichs des spezifischen Wertes sein.

Alternativ oder ergänzend kann bei dem Verfahren gemäß dem ersten Aspekt auch vorgesehen sein, dass der spezifische Betriebsparameter eine Drehzahl, insbesondere eine Soll-Drehzahl, des Betriebselements, eine, insbesondere volumetrische, Austragsleistung, insbesondere eine Nenn-Austragsleistung, eine minimale Austragsleistung und/oder eine maximale Austragsleistung, des Betriebselements, ein Durchmesser des Betriebselements, eine Steigung des Betriebselements, eine Kennlinie des Betriebselements, wie eine volumetrische Kennlinie des Betriebselements, einen Mindest-Füllgrad des Betriebselements, einen Maximal-Füllgrad des Betriebselements, eine Nennförderstärke des Betriebselements, eine Betriebstemperatur des Betriebselements und/oder eine maximale Beschleunigung in 3-Achsen des Betriebselements ist.

Diese Betriebsparameter sind besonders bevorzugt, da sie die Betriebsfähigkeit (insbesondere den Verschleiß) des Betriebselements beeinflussen können. Es ist daher vorteilhaft, wenn sie bei der NeuBerechnung der Betriebsfähigkeit, also bei der Ermittlung des zweiten Datums, einbezogen werden. Aus dem gleichen Grund, und wie auch bereits oben beschrieben, kann es vorteilhaft sein, deren Parameterwert in Abhängigkeit des Betriebsfähigkeitszustandes zu wählen.

Vorteilhafte Betriebsparameter in diesem und/oder einem anderen Zusammenhang können außerdem sein (i) für eine Dosierbandwaage: Normlänge des Förderbandes, maximaler Schräglauf des Förderbandes, maximale Bandbeladung und/oder maximale Förderband-Geschwindigkeit; (ii) für einen Vibrationsrinnendosierer: Maximaler Hub, maximale Frequenz, minimale Frequenz und/oder Soll-Frequenz; und/oder (iii) für ein Coriolis-Messgerät: Maximale Beschleunigung des Messrades, maximale Unwucht des Messrades und/oder maximaler Innendruck.

Vorteilhafterweise wird für den spezifischen Betriebsparameter der zugehörige spezifische Wert in Abhängigkeit eines eingesetzten Schüttguts ausgewählt.

Vorteilhafterweise wird, wenn die Drehzahl der spezifische Betriebsparameter ist, die Drehzahl, insbesondere die Soll-Drehzahl oder eine maximal erlaubte Drehzahl, für eine vorgegebene oder vorgebbare Kombination von Vorrichtung, Betriebselement und Schüttgut ausgewählt.

Herkömmlicherweise ist bei austauschbaren Betriebselementen beispielsweise die theoretische volumetrischen Austragsleistung häufig nicht oder nicht zuverlässig bekannt. Indem diese nun auf besonders einfache Weise bereitgestellt werden kann, können besonders vorteilhaft auch ungünstige Betriebszustände der Vorrichtung (Out of Specification - OoS) erkannt werden. Beispielsweise wurde herkömmlicherweise teilweise die Drehzahl eines drehbaren Betriebselements (beispielsweise einer Schnecke) bei Nichterreichen des Austrags-Sollwertes einfach immer mehr erhöht, wodurch der Füllgrad des Betriebselements immer weiter abnehmen konnte. Durch entsprechende Wahl des spezifischen Betriebsparameters kann die Information zu der Austragsleistung vorteilhafterweise bereitgestellt werden, so dass bei Nichterreichen des Austrags-Sollwertes ein Warnsignal erzeugt werden kann.

Die volumetrische Nenn-Austragsleistung des Betriebselements ist ein besonders vorteilhafter Betriebsparameter. Diese gibt vorteilhafterweise an, wieviel Volumen pro vollständigem Bewegungszyklus, insbesondere pro Umdrehung, des Betriebselements aus der Vorrichtung ausgetragen wird, wenn der Füllgrad des Betriebselements 100 % beträgt.

Vorteilhafterweise ist dabei die volumetrische Austragsleistung eine rein geometrische Betrachtung, so dass die Eigenschaften des Schüttguts, wie etwa dessen Dichte, keine Rolle spielen. Die Verknüpfung von volumetrische Austragsleistung zur gravimetrische Austragsleistung kann über die Schüttgutdichte des Materials und die aktuelle Bewegungsfrequenz des Betriebselements erfolgen. Der Füllgrad ist dabei vorteilhafterweise ein ausgleichender Faktor zwischen theoretischer und tatsächlicher volumetrischer Austragsleistung.

Vorteilhafterweise kann die volumetrische Austragsleistung des Betriebselements dazu eingesetzt werden festzustellen, ob die Vorrichtung zur Förderung eines Schüttguts geeignet ist. Geht beispielsweise das Verhältnis stark zurück, kann das ein Hinweis darauf sein, dass die Vorrichtung für das jeweilige Schüttgut ungeeignet ist bzw. zusätzliche Mittel (insbesondere Agitationshilfen) zur "Zwangs"-Füllung der Vorrichtung mit Schüttgut benötigt werden.

Zu dem Betriebselement kann eine volumetrische Kennlinie definiert oder definierbar sein. Diese gibt vorteilhafterweise an, wie die Austragsleistung des Betriebselement in der Vorrichtung für ein bestimmtes Schüttgut variiert, wenn sich die Bewegungsfrequenz, insbesondere die Drehzahl, des Betriebselements ändert.

In einer Ausführungsform kann die volumetrische Kennlinie in einem externen Speicher ablegbar und von dort abrufbar sein.

Alternativ oder ergänzend kann bei dem Verfahren gemäß dem ersten Aspekt auch vorgesehen sein, dass das Ermitteln des zweiten Datums aufweist, eine Betriebsintervalldauer der Vorrichtung und/oder eine Anzahl von Nutzungen der Vorrichtung bei der Ermittlung des zweiten Datums einzubeziehen.

Die Betriebsdauer kann damit entsprechend bei der Ermittlung der Betriebsfähigkeit, mithin des zweiten Datums, berücksichtigt werden.

Alternativ oder ergänzend kann bei dem Verfahren gemäß dem ersten Aspekt auch vorgesehen sein, dass das auf dem Transponder zuvor gespeicherte zweite Datum, mittels der Kommunikationseinrichtung, ausgelesen wird.

Dadurch kann vorteilhafterweise das vorherige zweite Datum als Ausgangspunkt für die Ermittlung des zweiten Datums zur Verfügung gestellt werden.

Alternativ oder ergänzend kann bei dem Verfahren gemäß dem ersten Aspekt auch vorgesehen sein, dass das zweite Datum basierend auch auf dem zuvor auf dem Transponder gespeicherte zweite Datum ermittelt wird, insbesondere indem das zuvor auf dem Transponder gespeicherte zweite Datum, vorzugsweise um einen, insbesondere zumindest teilweise basierend auf dem ersten Datum und/oder dem spezifischen Wert ermittelten, Wert, verändert, insbesondere erhöht oder verringert, wird.

Alternativ oder ergänzend kann bei dem Verfahren gemäß dem ersten Aspekt auch vorgesehen sein, dass (i) das ermittelte zweite Datum bei Beendigung des Betriebs der Vorrichtung auf dem Transponder gespeichert wird und/oder (ii) während des Betriebs der Vorrichtung, insbesondere periodisch, wiederholt ein zweites Datum ermittelt und jeweils auf dem Transponder gespeichert wird.

Es ist besonders effizient, das zweite Datum bei Beendigung des Betriebs zu speichern. Das ist vor allem bei einem immer nur vorübergehenden Betrieb der Vorrichtung besonders vorteilhaft. Indem das zweite Datum periodisch wiederholt gespeichert wird, kann, insbesondere bei einem langfristigen Betrieb der Vorrichtung, der Betriebsfähigkeitszustand regelmäßig auf dem Transponder aktualisiert werden. Dadurch kann ein Informationsverlust beispielsweise infolge eines Ausfalls der Vorrichtung vermieden oder zumindest reduziert werden.

Alternativ oder ergänzend kann bei dem Verfahren gemäß dem ersten Aspekt auch vorgesehen sein, dass Ist-Werte des spezifischen Betriebsparameters während des Betriebs der Vorrichtung erfasst und die Ist-Werte des Betriebsparameters mit einer Spezifikation des spezifischen Betriebsparameters, welche Spezifikation vorzugsweise bereitgestellt wurde, ermittelt wurde und/oder von dem ersten Datum aufgewiesen ist, verglichen werden, und wobei vorzugsweise ein Warnsignal erzeugt wird, wenn Ist-Werte des spezifischen Betriebsparameters außerhalb eines durch die Spezifikation beschriebenen Zulässigkeitsbereichs sind.

Dadurch kann der spezifische Betriebsparameter besonders zuverlässig überwacht und optional bei einem unerwarteten Betriebsverlauf schnell Maßnahmen, etwa basierend auf dem Warnsignal, ergriffen werden.

Dadurch kann beispielsweise besonders vorteilhaft vorbeugend oder auf Aufforderung hin eine Reinigung, eine Instandhaltung, eine Wartung und/oder ein Service und dergleichen mehr für das Betriebselement durchgeführt werden.

Beispielsweise kann der spezifische Betriebsparameter eine, insbesondere volumetrische, Austragsleistung des Betriebselements sein. Ein bevorzugter Wert für eine solche volumetrische Austragsleistung ist 5 Liter pro Minute. Es können aber freilich auch mehr, etwa 10 Liter pro Minute oder mehr, oder weniger, etwa 3 Liter pro Minute oder weniger, sein.

Wenn die tatsächliche Austragsleistung, also der Ist-Wert der Austragsleistung, davon abweicht, kann, insbesondere mittels des Warnsignals, eine Meldung ausgegeben werden, dass die Vorrichtung und das Schüttgut nicht zusammenpassen, dass die Vorrichtung und das eingesetzte Betriebselement nicht zusammenpassen und/oder dass an dem Betriebselement Anbackungen des Schüttguts bestehen.

Außerdem kann alternativ oder ergänzend eine Meldung ausgegeben werden, dass ein Bruch des Betriebselements vorliegen könnte.

Beispielsweise kann der spezifische Betriebsparameter eine Drehzahl sein. Wenn die tatsächliche Drehzahl, also der Ist-Wert der Drehzahl, davon abweicht, kann, insbesondere mittels des Warnsignals, eine Meldung ausgegeben werden, dass die die Vorrichtung außerhalb zulässiger Drehzahlenbereichen betrieben wird (Out of Specification - OoS).

Alternativ oder ergänzend kann bei dem Verfahren gemäß dem ersten Aspekt auch vorgesehen sein, dass zumindest teilweise basierend auf dem ersten Datum Spezifikationen von einer Vielzahl von Betriebsparametern für einen Betrieb der Vorrichtung mit dem Betriebselement ermittelt, insbesondere aus einem Speicher abgerufen, werden, und Ist-Werte der Vielzahl von Betriebsparameter während des Betriebs der Vorrichtung erfasst und die einzelnen Ist-Werte der jeweiligen Betriebsparameter mit der jeweiligen Betriebsparameter-Spezifikation verglichen werden, und wobei ein Warnsignal erzeugt wird, wenn Ist-Werte von Betriebsparametern außerhalb eines durch die jeweilige Betriebsparameter-Spezifikation beschriebenen Zulässigkeitsbereichs sind.

Auf diese Weise kann eine Betriebselement-abhängige Einrichtung der Vorrichtung vorgenommen werden. Das erste Datum kann folglich besonders vorteilhaft eingesetzt werden, eine weitergehende Einrichtung der Vorrichtung für deren Betrieb mit dem jeweiligen Betriebselement vorzunehmen.

Dadurch kann die Einrichtung der Vorrichtung ganz oder zumindest teilweise automatisiert werden. Das macht den Betrieb der Vorrichtung besonders einfach und kann die Betriebssicherheit erheblich steigern, da Fehlkonfigurationen ausgeschlossen oder das Risiko dafür zumindest reduziert werden kann.

Auf diese Weise kann beispielsweise eine volumetrische Kennlinie des Betriebselements und/oder die Nennförderstärke des Betriebselements ermittelt werden, optional jeweils unter weiterer Einbeziehung von Informationen zu dem Schüttgut (da die volumetrische Kennlinie und die Nennförderstärke von dem Schüttgut abhängen kann). Optional kann das Warnsignal anzeigen, wenn die Vorrichtung mit ihrer Förderstärke im nicht-linearen Bereich der volumetrischen Kennlinie betrieben wird. Wenn das Betriebselement eine Schnecke ist, kann die Nennförderstärke beispielsweise basierend auf Schneckendimensionen, wie deren Durchmesser und deren Länge, und der Steigung der Schnecke ermittelt werden.

Erfindungsgemäß ist bei dem Verfahren gemäß dem ersten Aspekt auch vorgesehen dass, mittels der Kommunikationseinrichtung, zumindest ein auf dem Transponder gespeichertes drittes Datum ausgelesen wird und, mittels der Kommunikationseinrichtung, eine Frequenz der Bewegung des Betriebselements ermittelt wird, und
dass ein Vergleich zwischen der ermittelten Bewegungsfrequenz und einer spezifischen Spezifikation der Bewegungsfrequenz des Betriebselements, wobei das dritte Datum die spezifische Spezifikation ist oder die spezifische Spezifikation zumindest teilweise basierend auf dem dritten Datum ermittelt, insbesondere aus einem Speicher abgerufen, wird, durchgeführt und ein Kontrollsignal, das indikativ ist für ein Ergebnis des Vergleichs, erzeugt wird,
wobei das austauschbare Betriebselement ferner auch ein eine Bewegung ausführendes Betriebselement ist.

Es wurde insoweit überraschend erkannt, dass ein besonders sicherer und zuverlässiger Betrieb der Vorrichtung möglich ist, indem der Transponder ferner sowohl zur Ermittlung der Bewegungsfrequenz eingesetzt wird als auch Informationen bereitstellt, die eine Überprüfung der ermittelten Bewegungsfrequenz ermöglichen. Dadurch kann besonders einfach eine Regelung der Bewegungsfrequenz erfolgen, da mit Bereitstellung des Betriebselements alle notwendigen Mittel und Informationen vorliegen.

Das dritte Datum kann beispielsweise ein Soll-Wert der Bewegungsfrequenz, ein Maximalwert der Bewegungsfrequenz, ein Minimalwert der Bewegungsfrequenz und/oder ein zulässiger Wertebereich der Bewegungsfrequenz sein. Indem das dritte Datum aus dem Transponder ausgelesen wird, steht unmittelbar die spezifische Spezifikation zur Verfügung und kann für den Vergleich eingesetzt werden.

Das dritte Datum kann beispielsweise eine Identifikationskennung des Betriebselements sein. Anhand dieser Identifikationskennung kann dann die spezifische Spezifikation ermittelt werden. Zum Beispiel kann die spezifische Spezifikation anhand der Identifikationskennung aus einer Datenbank abgerufen werden. Dies ist insoweit vorteilhaft, als die konkrete spezifische Spezifikation in einer Datenbank verwaltet werden kann und daher auch weitere Informationen zu dem Betriebselement zentral gepflegt und bereitgestellt werden können.

Die Aufgabe wird durch die Erfindung gemäß einem zweiten Aspekt dadurch gelöst, dass ein Verfahren zum Einrichten und/oder Betreiben einer Förder-, Mess-, Wäge-, Mahl-, Misch-, Filter-, Sieb-, Trocken- und/oder Dosiervorrichtung für Schüttgut, die zumindest ein eine Bewegung ausführendes Betriebselement, in Form eines Förder-, Austrags-, Mahl-, Misch-, Filter-, Sieb-, Trocken- und/oder Messorgans, mit zumindest einem Transponder und zumindest eine Kommunikationseinrichtung zum Datenaustausch mit dem Transponder aufweist,
wobei, mittels der Kommunikationseinrichtung, zumindest ein auf dem Transponder gespeichertes drittes Datum ausgelesen wird und, mittels der Kommunikationseinrichtung, eine Frequenz der Bewegung des Betriebselements ermittelt wird, und
wobei ein Vergleich zwischen der ermittelten Bewegungsfrequenz und einer spezifischen Spezifikation der Bewegungsfrequenz des Betriebselements, wobei das dritte Datum die spezifische Spezifikation ist oder die spezifische Spezifikation zumindest teilweise basierend auf dem dritten Datum ermittelt, insbesondere aus einem Speicher abgerufen, wird, durchgeführt und ein Kontrollsignal, das indikativ ist für ein Ergebnis des Vergleichs, erzeugt wird, vorgeschlagen wird.

Es wurde insoweit überraschend erkannt, dass ein besonders sicherer und zuverlässiger Betrieb der Vorrichtung möglich ist, indem der Transponder sowohl zur Ermittlung der Bewegungsfrequenz eingesetzt wird als auch Informationen bereitstellt, die eine Überprüfung der ermittelten Bewegungsfrequenz ermöglichen. So kann ein unerwünschter Zustand der Vorrichtung zuverlässig erkannt werden. Außerdem kann dadurch besonders einfach eine Regelung der Bewegungsfrequenz erfolgen, da mit Bereitstellung des Betriebselements alle notwendigen Mittel und Informationen vorliegen.

Das dritte Datum kann beispielsweise ein Soll-Wert der Bewegungsfrequenz, ein Maximalwert der Bewegungsfrequenz, ein Minimalwert der Bewegungsfrequenz und/oder ein zulässiger Wertebereich der Bewegungsfrequenz sein. Indem das dritte Datum aus dem Transponder ausgelesen wird, steht unmittelbar die spezifische Spezifikation zur Verfügung und kann für den Vergleich eingesetzt werden.

Das dritte Datum kann beispielsweise eine Identifikationskennung des Betriebselements sein. Anhand dieser Identifikationskennung kann dann die spezifische Spezifikation ermittelt werden. Zum Beispiel kann die spezifische Spezifikation anhand der Identifikationskennung aus einer Datenbank abgerufen werden. Dies ist insoweit vorteilhaft, als die konkrete spezifische Spezifikation in einer Datenbank verwaltet werden kann und daher auch weitere Informationen zu dem Betriebselement zentral gepflegt und bereitgestellt werden können.

Vorzugsweise wird der Vergleich und/oder das Erzeugen des Kontrollsignals ganz oder teilweise mittels einer Rechenvorrichtung durchgeführt. Die Rechenvorrichtung kann vorteilhafterweise für die Durchführung aller oder einzelner hierin beschriebener Verfahrensschritte verwendet werden, insbesondere jeweils dazu eingerichtet sein diese Schritte auszuführen, sofern aus dem Zusammenhang nichts anderes ersichtlich ist. Die Rechenvorrichtung kann beispielsweise in Software, in Hardware oder einer Kombination von beidem realisiert sein. Die Rechenvorrichtung kann alternativ oder ergänzend einen Speicher, einen Prozessor, eine Empfangseinrichtung, eine Sendeeinrichtung oder eine beliebige Kombination davon aufweisen. Die Rechenvorrichtung kann alternativ oder ergänzend alles, was von ihr aufgewiesen ist, wie insbesondere alle dafür notwendigen Ressourcen, beispielsweise in Form von Software- und/oder Hardwareressourcen, bereitstellen und/oder verfügbar machen und/oder aufweisen.

Alle Merkmale und Optionen, die in Bezug auf den ersten Aspekt der Erfindung, und insbesondere zu den verschiedenen Typen von Vorrichtungen, Organen und Betriebselementen, beschrieben wurden, sind vorzugsweise entsprechend auch bei dem zweiten Aspekt der Erfindung gültig, einzeln und in beliebiger Kombination, soweit sich aus dem Zusammenhang nichts anderes ergibt. Daher kann auf die vorherigen Ausführungen verwiesen werden.

Alternativ oder ergänzend kann bei dem Verfahren gemäß dem ersten und/oder zweiten Aspekt auch vorgesehen sein, dass basierend auf dem Kontrollsignal eine Regelung der Bewegung, insbesondere der Bewegungsfrequenz, des Betriebselements durchgeführt, insbesondere die Bewegungsfrequenz nach oben begrenzt und/oder auf einem definierten oder definierbaren Wert gehalten, wird.

Eine Regelung der Bewegungsfrequenz ist besonders vorteilhaft realisierbar, da mit Bereitstellung des Betriebselements alle notwendigen Mittel zur Ermittlung der aktuellen Bewegungsfrequenz und Informationen hinsichtlich einer, insbesondere Betriebselement-abhängigen, zulässigen Bewegungsfrequenz vorliegen.

Das Kontrollsignal kann dazu vorteilhafterweise einer Regeleinheit der Vorrichtung zugeführt werden, welche die Regelung der Bewegungsfrequenz vornimmt. Die Regeleinheit kann beispielsweise in Software, in Hardware oder einer Kombination von beidem realisiert sein. Die Regeleinheit kann alternativ oder ergänzend einen Speicher, einen Prozessor, eine Empfangseinrichtung, eine Sendeeinrichtung oder eine beliebige Kombination davon aufweisen. Die Regeleinheit kann alternativ oder ergänzend alles, was von ihr aufgewiesen ist, wie insbesondere alle dafür notwendigen Ressourcen, beispielsweise in Form von Software- und/oder Hardwareressourcen, bereitstellen und/oder verfügbar machen und/oder aufweisen.

Alternativ oder ergänzend kann bei dem Verfahren gemäß dem ersten und/oder zweiten Aspekt auch vorgesehen sein, dass (i) die Bewegung des Betriebselements eine Drehbewegung des Betriebselements um eine Drehachse ist und vorzugsweise die Bewegungsfrequenz eine Drehzahl ist, (ii) die Bewegung des Betriebselements eine Umlaufbewegung des Betriebselements ist und vorzugsweise die Bewegungsfrequenz eine Umlauffrequenz ist und/oder (iii) die Bewegung des Betriebselements eine lineare Bewegung, insbesondere eine, vorzugsweise horizontale oder vertikale, Hin- und Herbewegung, des Betriebselements ist.

Vorteilhafterweise ist die Bewegung des Betriebselements eine periodische Bewegung.

Beispielsweise kann die Umlaufbewegung des Betriebselement eine, insbesondere kontinuierliche, Umlaufbewegung eines Bandes, wie ein Förder- oder Transportband, sein.

Alternativ oder ergänzend kann bei dem Verfahren gemäß dem ersten und/oder zweiten Aspekt auch vorgesehen sein, dass, während das Betriebselement die Bewegung ausführt, der Transponder, mittels der Kommunikationseinrichtung, wiederholt, insbesondere periodisch, erfasst wird und basierend auf dem Erfassungsintervall die Bewegungsfrequenz ermittelt wird.

Auf diese Weise kann die - insbesondere momentane- Bewegungsfrequenz ermittelt werden. So kann beispielsweise jedes Mal, wenn der Transponder während seiner Bewegung in die Nähe der Kommunikationseinrichtung gelangt, insbesondere an dieser vorbeigeführt wird, ein Näherungs-Ereignis erkannt werden. Der inverse Wert des zeitlichen Abstands zwischen zwei solchen Näherungs-Ereignissen kann dann als Bewegungsfrequenz ermittelt werden. Optional kann ein Durchschnittswert anhand drei oder mehr als drei Näherungs-Ereignisse als Bewegungsfrequenz ermittelt werden.

Unter einem "Erfassen" des Transponders mittels der Kommunikationseinrichtung wird dabei vorzugsweise verstanden, dass sich Transponder und Kommunikationseinrichtung derart nähern, dass die Kommunikationseinrichtung mit dem Transponder in Wirkverbindung gebracht wird, insbesondere derart, dass die Kommunikationseinrichtung Daten von dem Transponder auslesen und/oder Daten auf den Transponder schreiben kann.

Vorteilhafterweise erfasst die Kommunikationseinrichtung den Transponder, wenn der Transponder einen Abstand von 30 cm oder weniger, vorzugsweise von 20 cm oder weniger, vorzugsweise von 15 cm oder weniger, vorzugsweise von 10 cm oder weniger, vorzugsweise von 5 cm oder weniger, vorzugsweise von 3 cm oder weniger, vorzugsweise von 1 cm oder weniger, zu der Kommunikationseinrichtung hat. Dadurch kann die Genauigkeit der ermittelten Bewegungsfrequenz gesteigert werden.

Alternativ oder ergänzend kann bei dem Verfahren gemäß dem ersten und/oder zweiten Aspekt auch vorgesehen sein, dass, mittels der Kommunikationseinrichtung, die Bewegungsfrequenz des Betriebselements durch ein Auslesen von die Bewegungsfrequenz des Betriebselements betreffenden Sensordaten aus dem Transponder ermittelt wird.

Dies ist besonders vorteilhaft, da somit die Information zur Bewegungsfrequenz direkt von dem Transponder bereitgestellt und aus diesem ausgelesen werden kann. Die Aktiv-Zeit der Kommunikationseinrichtung kann dadurch reduziert werden.

Außerdem kann der Abstand zwischen dem Transponder und der Kommunikationseinrichtung erhöht werden. Denn die Bewegungsfrequenz muss nicht anhand der oben beschriebenen Näherungs-Ereignisse ermittelt werden, wozu unter Umständen ein nur begrenzter Interaktionsabstand zwischen Transponder und Kommunikationseinrichtung zulässig ist. Dadurch wird die Flexibilität des Verfahrens und der Anordnung der von Transponder und Kommunikationseinrichtung gesteigert.

Alternativ oder ergänzend kann bei dem Verfahren gemäß dem ersten und/oder zweiten Aspekt auch vorgesehen sein, dass (i) das zweite Datum zumindest teilweise basierend auf der ermittelten Bewegungsfrequenz ermittelt wird, (ii) das dritte Datum identisch zu dem ersten Datum ist, und wobei vorzugsweise der spezifische Wert als spezifische Spezifikation verwendet wird, und/oder (iii) die spezifische Spezifikation zulässige Werte der Bewegungsfrequenz beschreibt oder ermittelbar macht, insbesondere einen Soll-Wert der Bewegungsfrequenz, einen Maximalwert der Bewegungsfrequenz, einen Minimalwert der Bewegungsfrequenz und/oder einen zulässigen Wertebereich der Bewegungsfrequenz beschreibt oder ist.

Beispielsweise kann das erste Datum gerade dem spezifischen Wert entsprechen und der spezifische Wert sowohl als spezifische Spezifikation als auch bei der Ermittlung des zweiten Datums verwendet werden. Dadurch kann besonders effizient sowohl der spezifische Betriebsparameter eingestellt werden als auch der Betriebsfähigkeitszustand aktualisiert werden.

Alternativ oder ergänzend kann bei dem Verfahren gemäß dem ersten und/oder zweiten Aspekt auch vorgesehen sein, dass der Transponder Messdaten von zumindest einem Sensor empfängt, oder der Transponder den zumindest einen Sensor aufweist.

Dadurch können die Sensordaten an einem zentralen Ort, nämlich dem Transponder, bereitgestellt und von dort besonders einfach und zuverlässig mit der Kommunikationseinrichtung ausgelesen werden. Dadurch wird der Aufwand, um die Sensordaten in das Verfahren einzubeziehen deutlich reduziert und somit ebenfalls die Gesamtkosten. Außerdem ist es dadurch möglich, relativ flexibel unterschiedliche Sensoren einzusetzen.

Indem der Transponder den Sensor aufweist, kann der Sensor direkt zusammen mit dem Transponder bereitgestellt werden, was eine kompakte Anordnung ermöglicht. Der Einsatz von Transpondern mit integrierten Sensoren kann deren Funktionsumfang dabei erheblich erweitern.

Vorteilhafterweise sind der Transponder und der zumindest eine Sensor schaltungstechnisch integriert.

Alternativ oder ergänzend kann bei dem Verfahren gemäß dem ersten und/oder zweiten Aspekt auch vorgesehen sein, dass ein erster Sensor einen Drehzahlsensor, einen Positionssensor, einen Gyroskopsensor, ein Magnetometer, einen Neigungssensor und/oder einen Beschleunigungssensor aufweist oder darstellt und der erste Sensor die Messdaten betreffend die Bewegungsfrequenz dem Transponder bereitstellt.

Somit kann die Bewegungsfrequenz besonders einfach und dennoch zuverlässig ermittelt werden.

Außerdem kann anhand einer Auswertung der Messdaten des Beschleunigungssensors vorteilhafterweise ein Bruch oder eine Überhitzung des Betriebselements erkannt werden, wenn die gemessene Beschleunigung nicht mit der Soll-Beschleunigung aufgrund der für das Betriebselement eingestellten Drehzahl übereinstimmt. Optional kann im Fehlerfall ein entsprechendes Warnsignal erzeugt werden.

Im Gegensatz dazu wird bei herkömmlichen Vorrichtungen mit einem drehbaren Betriebselement beispielsweise die Drehzahl immer weiter erhöht, solange die Ist-Drehzahl nicht erreicht ist. Mit dem vorgeschlagenen Verfahren können durch Einbeziehung der Beschleunigungswerte aber ungünstige Betriebszustände (wie eben ein Bruch oder eine Überhitzung des Betriebselements) erkannt werden, welche das Erreichen der Soll-Drehzahl verhindern.

Alternativ oder ergänzend kann bei dem Verfahren gemäß dem ersten und/oder zweiten Aspekt auch vorgesehen sein, dass die Messdaten, mittels der Kommunikationseinrichtung, aus dem Transponder ausgelesen werden, und vorzugsweise zumindest ein erster Teil der Messdaten, insbesondere die Messdaten des ersten und/oder zumindest eines zweiten Sensors, bei der Ermittlung des spezifischen Wertes und/oder des zweiten Datums einbezogen werden.

Indem Sensordaten für die Ermittlung des spezifischen Wertes und/oder des zweiten Datums einbezogen werden, können die aktuellen Umgebungsbedingungen besonders einfach einbezogen und berücksichtigt werden.

Beispielsweise kann der zumindest eine zweite Sensor ein Temperatursensor und/oder ein Luftfeuchtigkeitssensor sein. Dadurch kann die Umgebungstemperatur und/oder die Umgebungsluftfeuchtigkeit bei der Ermittlung des zweiten Datums, mithin des Betriebsfähigkeitszustandes (wie insbesondere des Verschleißzustandes), einbezogen werden.

So könnte ein Betrieb der Vorrichtung mit dem Betriebselement bei einer geringeren Temperatur oder geringeren Luftfeuchtigkeit beispielsweise auch einen geringeren zusätzlichen Verschleiß und damit eine geringere Abnahme der Betriebsfähigkeit verursachen, als ein Betrieb der Vorrichtung mit dem Betriebselement bei einer höheren Temperatur oder höheren Luftfeuchtigkeit.

Alternativ oder ergänzend kann bei dem Verfahren gemäß dem ersten und/oder zweiten Aspekt auch vorgesehen sein, dass das Verfahren aufweist, einen Wert eines weiteren Betriebsparameters der Vorrichtung zu ermitteln und wobei zumindest ein zweiter Teil der Messdaten, insbesondere die Messdaten des ersten und/oder zumindest eines dritten Sensors, bei der Ermittlung des Wertes des weiteren Betriebsparameters einbezogen werden.

Der weitere Betriebsparameter kann optional auf den ermittelten Wert eingestellt werden. Alternativ oder ergänzend kann der Betriebsparameter auch anhand des ermittelten Wertes überwacht und bei einem unzulässigen Wert des Betriebsparameters kann ein Warnsignal erzeugt werden.

Indem Sensordaten für die Ermittlung des Wertes des weiteren Betriebsparameters einbezogen werden, können auch hier die aktuellen Umgebungsbedingungen besonders einfach einbezogen und berücksichtigt werden. Natürlich können die Messdaten auch direkt den Wert des weiteren Betriebsparameters darstellen.

Beispielsweise können die Messdaten eines Temperatursensors in Bezug auf eine Temperatur des Betriebselements ausgewertet und bei Übersteigen einer Maximaltemperatur kann ein Warnsignal erzeugt werden. So kann beispielsweise eine zu große Wärmeentwicklung aufgrund einer Reibung zwischen Betriebselement und Schüttgut und/oder ein Einfluss von Fremdkörpern in dem Schüttgut zuverlässig erkannt werden.

Beispielsweise können die Messdaten eines Temperatursensors in Bezug auf eine Temperatur des Schüttguts ausgewertet und bei Übersteigen einer Maximaltemperatur kann ein Warnsignal erzeugt werden. So kann beispielsweise eine zu große Wärmeentwicklung aufgrund einer Reibung zwischen Betriebselement und Schüttgut zuverlässig erkannt werden.

Beispielsweise können die Messdaten eines Erschütterungssensors in Bezug auf eine Vibration des Betriebselements ausgewertet und bei Erreichen einer Maximalamplitude der Vibration kann ein Warnsignal erzeugt werden. So kann beispielsweise eine zu große Schwingung des Betriebselements zuverlässig erkannt und einem Bruch des Betriebselements vorgebeugt werden.

Alternativ oder ergänzend kann bei dem Verfahren gemäß dem ersten und/oder zweiten Aspekt auch vorgesehen sein, dass der zweite und/oder dritte Sensor jeweils eine physikalische Größe der Vorrichtung oder ihren Teilen, insbesondere des Betriebselements, und/oder der Umgebung der Vorrichtung oder ihren Teilen, insbesondere des Betriebselements, misst und/oder der jeweilige Sensor einen Temperatursensor, einen Feuchtigkeitssensor, einen Beschleunigungssensor, einen Drehzahlsensor, einen Gyroskopsensor, ein Magnetometer, einen Gassensor, einen Neigungssensor und/oder einen Drucksensor aufweist.

Alternativ oder ergänzend kann bei dem Verfahren gemäß dem ersten und/oder zweiten Aspekt auch vorgesehen sein, dass die Messdaten, insbesondere mittels der Kommunikationseinrichtung und/oder versehen mit einer Information über den Zeitpunkt der Messung, in einen Cloud-Speicher übertragen und dort abgelegt werden.

Dadurch lässt sich besonders einfach eine Protokollierung der erfassten Messgrößen realisieren. Beispielsweise kann ein auftretendes Problem basierend auf den in dem Cloud-Speicher abgelegten Messdaten analysiert und so mögliche Fehlerursachen schneller identifiziert werden.

Die Zeitinformation entspricht dabei vorzugsweise dem Zeitpunkt des Auslesens der Messdaten aus dem Transponder und/oder wird von der Kommunikationseinrichtung beim Auslesen der Messdaten hinzugefügt.

Alternativ oder ergänzend kann es auch vorteilhaft sein, dass die Messdaten, mittels der Kommunikationseinrichtung, in dem Transponder mit einer Zeitinformation ergänzt werden.

Alternativ oder ergänzend kann bei dem Verfahren gemäß dem ersten und/oder zweiten Aspekt auch vorgesehen sein, dass das Verfahren aufweist, dass zumindest eine Information zu dem Schüttgut bereitgestellt wird und vorzugsweise, dass das zweite Datum, der spezifische Wert und/oder die spezifische Spezifikation zumindest teilweise auch in Abhängigkeit der bereitgestellten Information ermittelt wird.

Dies macht es besonders einfach möglich, die Eigenschaften des jeweils verarbeiteten Schüttguts beim Betrieb der Vorrichtung und beim Ermitteln der auftretenden Betriebsfähigkeitsreduzierung (wie bedingt durch Verschleiß) zu berücksichtigen.

Beispielsweise kann ein Schüttgut wie Kies aufgrund einer stärkeren abrasiven Wirkung auf das Betriebselement einen höheren Verschleiß und damit eine größere Betriebsfähigkeitsreduzierung bei dem Betriebselement verursachen als ein Schüttgut wie Mehl. Auch können unterschiedliche Schüttgüter unterschiedliche Werte für den spezifischen Betriebsparameter erfordern, um einen bestmöglichen Betrieb der Vorrichtung zu gewährleisten.

Informationen eines Schüttguts können beispielsweise die Partikelform, die Feuchte, den Böschungswinkel, die Partikelgröße und/oder deren Verteilung, die Fluidisierungsgeschwindigkeit, eine Fließeigenschaft (insbesondere die Hauptspannung, die Druckfestigkeit, der effektiver Reibungswinkel, die Fließfähigkeit und/oder der Wandreibungswinkel), die Dichte und/oder das Fließverhalten des Schüttguts aufweisen. Beispielsweise kann das Fließverhalten des Schüttguts definiert oder definierbar sein durch einen Böschungswinkel, eine Partikelverteilung und/oder eine Druckfestigkeit des Schüttguts.

Alternativ oder ergänzend kann bei dem Verfahren gemäß dem ersten und/oder zweiten Aspekt auch vorgesehen sein, dass das Verfahren aufweist, dass ein Warnsignal erzeugt und/oder ein Betrieb der Vorrichtung verweigert oder beendet wird, wenn das zweite Datum einen definierten oder definierbaren Grenzwert unter- oder überschreitet und/oder wenn das Kontrollsignal indikativ dafür ist, dass die ermittelte Bewegungsfrequenz Werte außerhalb der spezifischen Spezifikation einnimmt.

Dadurch kann besonders zuverlässig ein ordnungsgemäßer Betrieb der Vorrichtung erreicht werden. Insbesondere kann eine dauerhafte Beschädigung der Vorrichtung oder ihren Teilen bei einer zu geringen Betriebsfähigkeit (insbesondere bei einem zu großen Verschleiß) des Betriebselements vermieden werden.

Optional kann das Warnsignal zur Anzeige einer Empfehlung für eine Instandhaltungsmaßnahme, eines Ausfallzeitpunktes oder eine Diagnose dienen.

Alternativ oder ergänzend kann bei dem Verfahren gemäß dem ersten und/oder zweiten Aspekt auch vorgesehen sein, dass die Förder-, Mess-, Wäge-, Mahl-, Misch-, Filter-, Sieb-, Trocken- und/oder Dosiervorrichtung zumindest eine Aufnahmeeinheit zum Aufnehmen von Schüttgut und/oder zumindest eine mit dem Betriebselement in Wirkverbindung stehende Antriebseinheit aufweist.

Beispielsweise weist die Vorrichtung die Aufnahmeeinheit zum Aufnehmen von Schüttgut auf, wobei die Aufnahmeeinheit in einen Bereich mündet, in dem das Betriebselement der Vorrichtung vorgesehen ist. Mittels des Betriebselements kann dann das Schüttgut beispielsweise verlagert werden.

Mittels der Antriebseinheit kann vorteilhafterweise das Betriebselement bewegt, insbesondere gedreht, werden. Die Antriebseinheit kann über ein Getriebe und/oder einen Motor verfügen. Die Antriebseinheit kann beispielsweise über eine Kupplung mit dem Betriebselement gekoppelt sein.

Vorteilhafterweise kann mittels der Antriebseinheit die Bewegungsfrequenz, insbesondere eine Drehzahl, des Betriebselements eingestellt, geregelt und/und gesteuert werden.

Nachfolgend wird eine grundsätzliche Ausgestaltung einer vorteilhaften Vorrichtung erläutert. Eine exemplarische Dosiervorrichtung, wie sie vorteilhafterweise für das vorgeschlagene Verfahren eingesetzt werden kann, wird zum kontinuierlichen volumetrischen und gravimetrischen Dosieren von Schüttgütern, wie Pulvern und Granulaten eingesetzt. Eine solche Dosiervorrichtung arbeitet nach dem Prinzip der externen Agitation. Vorzugsweise wird dabei ein Dosiertrog aus verschleißfestem Elastomer von außen bewalkt und unterstützt somit einen Produktschwund im Materialfluss im Behälter und einen gleichmäßigen Füllgrad im Dosierorgan. Die Geometrie von Abwurfrohren der Dosiervorrichtung erzeugt einen pulsationsarmen Abwurf bei kleinen Drehzahlen und vergrößert damit den nutzbaren Einstellbereich bei hoher Dosierkonstanz. Ein Dosierbehälter kann beispielsweise nach Art einer Aufnahmeeinheit zum Aufnehmen von Schüttgut vorhanden sein. Unterhalb eines solchen Dosierbehälters ist dann vorzugsweise ein Dosiertrog, auch kurz als Trog bezeichnet, vorhanden, durch den ein Austragsorgan führt, beispielsweise eine längliche Förderschnecke, um bei Bewegung des Austragsorgans, beispielsweise bei Drehbewegung der Förderschnecke, eine Bewegung des Schüttgutes entlang einer definierten Richtung, wie einer Längsachse der Förderschnecke, zu erzwingen. Das Austragsorgan, beispielsweise die Förderschnecke, führt vorteilhafterweise das Schüttgut zu einem Abwurfkopf, welcher beispielsweise mit einer Wiegeplattform verbindbar oder verbunden ist, so dass Informationen über das Gewicht des geförderten Schüttgutes zur Verfügung stehen. Das Austragsorgan ist vorzugsweise über eine Kupplung und/oder ein Getriebe mit einer Antriebseinheit verbunden oder verbindbar.

Alternativ oder ergänzend kann bei dem Verfahren gemäß dem ersten und/oder zweiten Aspekt auch vorgesehen sein, dass das Betriebselement eine Schraube, eine Rinne, insbesondere eine Vibrationsrinne, eine Schnecke, eine Spirale, ein Band, insbesondere ein Transport-, Platten- und/oder Förderband, eine Schleuse, insbesondere eine Rotationsschleuse, ein Messrad, eine Messrolle, ein Kettentrog, ein Schleusenrad, eine Rolle, ein Räumarm, ein Mahlwerk, ein Rührwerk, eine Filterkartusche, ein Siebpaneel, ein, insbesondere zylinderförmiger, Behälter, eine Zellenradschleuse und/oder ein Zellenrad ist.

Vorzugsweise können die genannten Betriebselemente wie folgt den einzelnen Organen zugeordnet oder zuordenbar sein und/oder die einzelnen Organe jeweils realisieren:
(i) Förderorgan: Schraube, Rinne, Schnecke, Spirale, Band, Räumarm, Schleusenrad, Zellenrad, Zellenradschleuse, Kettentrog und/oder Rolle;
(ii) Austragsorgan: Schraube, Rinne, Schnecke, Spirale, Band, Räumarm, Schleusenrad, Zellenrad, Zellenradschleuse, Schleuse und/oder Rolle;
(iii) Mahlorgan: Mahlwerk;
(iv) Mischorgan: Rührwerk und/oder Behälter;
(v) Filterorgan: Filterkartusche;
(vi) Sieborgan: Siebpaneel;
(vii) Trockenorgan: Behälter; und/oder
(viii) Messorgan: Zellenradschleuse, Messrad und/oder Messrolle.

Vorzugsweise können die genannten Betriebselemente wie folgt innerhalb der einzelnen Vorrichtungen als Betriebselemente vorgesehen oder vorsehbar sein:
(i) Fördervorrichtung: Schraube, Rinne, Schnecke, Spirale, Band, Räumarm, Schleusenrad, Zellenrad, Zellenradschleuse, Kettentrog, Schleuse, Messrad, Messrolle und/oder Rolle;
(ii) Messvorrichtung: Schraube, Rinne, Schnecke, Spirale, Band, Räumarm, Schleusenrad, Zellenrad, Zellenradschleuse, Kettentrog, Schleuse, Rolle, Messrad und/oder Messrolle;
(iii) Wägevorrichtung: Schraube, Rinne, Schnecke, Spirale, Band, Räumarm, Schleusenrad, Zellenrad, Zellenradschleuse, Kettentrog, Schleuse, Rolle, Messrad und/oder Messrolle;
(iv) Mahlvorrichtung: Mahlwerk;
(v) Mischvorrichtung: Rührwerk und/oder Behälter;
(vi) Filtervorrichtung: Filterkartusche;
(vii) Siebvorrichtung: Siebpaneel;
(viii) Trockenvorrichtung: Behälter; und/oder
(ix) Dosiervorrichtung: Schraube, Rinne, Schnecke, Spirale, Band, Räumarm, Schleusenrad, Zellenrad, Zellenradschleuse, Kettentrog, Schleuse, Messrad, Messrolle und/oder Rolle.

Vorzugsweise kann das Betriebselement ein Betriebselement vom Typ "Vibration" (etwa für die Rinne), vom Typ "Rotation-Translatorisch" (etwa für die Schraube, Schnecke und Spirale), vom Typ "Linear" (etwa für das Band) und/oder vom Typ "Rotation" (etwa für die Schleuse) sein.

Der Durchmesser des Betriebselements kann beispielsweise 10 mm oder mehr, insbesondere 100 mm oder mehr, insbesondere 300 mm oder mehr, 800 mm oder weniger, insbesondere 500 mm oder weniger, insbesondere 300 mm oder weniger, insbesondere 100 mm oder weniger, und/oder zwischen 10 mm und 800 mm, insbesondere zwischen 100 mm und 500 mm, betragen.

Die Länge des Betriebselements kann beispielsweise 100 mm oder mehr, insbesondere 500 mm oder mehr, insbesondere 1000 mm oder mehr, insbesondere 1500 mm oder mehr, insbesondere 3000 mm oder mehr, insbesondere 5000 mm oder mehr, insbesondere 7000 mm oder mehr, 20000 mm oder weniger, insbesondere 15000 mm oder weniger, insbesondere 10000 mm oder weniger, insbesondere 8000 mm oder weniger, insbesondere 5000 mm oder weniger, insbesondere 3000 mm oder weniger, insbesondere 1000 mm oder weniger, insbesondere 800 mm oder weniger, insbesondere 500 mm oder weniger, insbesondere 300 mm oder weniger, insbesondere 100 mm oder weniger, und/oder zwischen 100 mm und 20000 mm, insbesondere zwischen 200 mm und 15000 mm, insbesondere zwischen 200 mm und 10000 mm, insbesondere zwischen 500 mm und 5000 mm, betragen.

Die Steigung des Betriebselements kann beispielsweise 10 mm oder mehr, insbesondere 50 mm oder mehr, insbesondere 100 mm oder mehr, insbesondere 300 oder mehr, 800 mm oder weniger, insbesondere 500 mm oder weniger, insbesondere 300 mm oder weniger, insbesondere 100 mm oder weniger, insbesondere 50 mm oder weniger, und/oder zwischen 10 mm und 800 mm, insbesondere zwischen 10 mm und 500 mm, insbesondere zwischen 50 mm und 300 mm, betragen.

Das volumetrische Austragsleistung pro Zeit des Betriebselements kann beispielsweise 2 I/h oder mehr, insbesondere 50 I/h oder mehr, insbesondere 100 I/h oder mehr, insbesondere 300 I/h oder mehr, insbesondere 500 I/h oder mehr, insbesondere 1000 I/h oder mehr, insbesondere 3000 I/h oder mehr, insbesondere 5000 I/h oder mehr, insbesondere 7000 I/h oder mehr, insbesondere 10000 I/h oder mehr, insbesondere 15000 I/h oder mehr, 20000 I/h oder weniger, insbesondere 15000 I/h oder weniger, insbesondere 10000 I/h oder weniger, insbesondere 7000 I/h oder weniger, insbesondere 5000 I/h oder weniger, insbesondere 1000 I/h oder weniger, insbesondere 500 I/h oder weniger, insbesondere 300 I/h oder weniger, insbesondere 100 I/h oder weniger, und/oder zwischen 2 l/h und 20000 I/h, insbesondere zwischen 100 l/h und 15000 I/h, insbesondere zwischen 500 l/h und 10000 l/h, insbesondere zwischen 1000 l/h und 10000 I/h, betragen.

Beispielsweise kann die Spirale Abmessungen aufweisen von 57x29x450 mm³.

Beispielsweise kann die Schnecke Abmessungen aufweisen von 57x57x450 mm³.

Alternativ oder ergänzend kann bei dem Verfahren gemäß dem ersten und/oder zweiten Aspekt auch vorgesehen sein, dass der Transponder einen aktiven oder passiven RFID-Transponder aufweist und/oder der Transponder mit dem Betriebselement verbunden, insbesondere an dem Betriebselement, insbesondere auf einer Oberfläche des Betriebselements, angeordnet ist.

Der Transponder kann einen Datenspeicher aufweisen, in welchem das erste Datum, das zweite Datum, das dritte Datum und/oder die Messdaten speicherbar und aus welchem diese Daten auslesbar sind. Optional weist der Transponder die Sensoren auf.

Die Kommunikationseinrichtung kann beispielsweise ein RFID-Modul, wie NXP MFRC-522, und/oder einen Near Field Communication (NFC) controller, wie PN532, aufweisen. So können mittels der Kommunikationseinrichtung besonders vorteilhaft Daten von dem Transponder gelesen und/oder Daten in dem Transponder gespeichert werden.

Beispielsweise ist der Transponder ein Haftetikett, das auf dem Betriebselement angeordnet ist.

Der aktive RFID-Transponder kann eine Energieversorgung aufweisen. Damit kann er autark betrieben werden. Der aktive RFID-Transponder kann eine Recheneinrichtung, welche beispielsweise Messdaten von einem Sensor empfängt und/oder verarbeitet, etwa in Form eines Microcontrollers aufweisen.

Alternativ oder ergänzend kann bei dem Verfahren gemäß dem ersten und/oder zweiten Aspekt auch vorgesehen sein, dass der Transponder in Kommunikation mit einem Cloud-Speicher steht und wobei der Transponder Daten aus dem Cloud-Speicher abruft und/oder Daten in dem Cloud-Speicher ablegt.

Dadurch können auch ohne Einbeziehung der Kommunikationseinrichtung die Daten von dem Transponder gelesen und auf den Transponder geschrieben werden. Außerdem kann eine Sicherung und Rücksicherung von Transponderdaten auf diese Weise besonders einfach realisiert sein.

Beispielsweise können über eine zentrale Datenaustauschvorrichtung die jeweiligen Daten von gleich mehreren solcher Transponder gelesen und auf die Transponder geschrieben werden.

Alternativ oder ergänzend kann bei dem Verfahren gemäß dem ersten und/oder zweiten Aspekt auch vorgesehen sein, dass Diagnosedaten zu der Vorrichtung oder deren Teile, wie insbesondere dem Betriebselement, in einem Cloud-Speicher abgelegt und/oder von dort abgerufen werden.

Beispielsweise kann es sich bei den Diagnosedaten um eine zeitabhängige Betriebsfähigkeitsänderungsrate, insbesondere eine zeitabhängige Verschleißänderungsrate, handeln. Optional kann die Betriebsfähigkeitsänderungsrate auch zusammen mit einer Bewegungsfrequenz, insbesondere einem mittleren Wert oder einem Medianwert, für die einzelnen Zeitabschnitte angegeben sein. Dadurch kann besonders einfach ein Zusammenhang zwischen Betriebsfähigkeitsänderungsrate und Bewegungsfrequenz hergestellt werden.

Die Diagnosedaten können dadurch vorteilhafterweise zentral gespeichert werden und stehen vorzugsweise auch anderen Vorrichtungen zur Verfügung. Dadurch ist es möglich, dass mehrere Vorrichtungen miteinander Daten austauschen.

Alternativ oder ergänzend kann bei dem Verfahren gemäß dem ersten und/oder zweiten Aspekt auch vorgesehen sein, dass das erste Datum eine Identifikationskennung des Betriebselements, eine Soll-Bewegungsfrequenz, insbesondere eine Soll-Drehzahl, des Betriebselements und/oder eine Spezifikation des spezifischen Betriebsparameters aufweist oder darstellt.

Anhand der Identifikationskennung können weitere Informationen, wie beispielsweise eine Soll-Bewegungsfrequenz oder eine Spezifikation, zu dem Betriebselement besonders einfach ermittelt, etwa aus einem Speicher abgerufen, werden. Dadurch muss auf dem Transponder selbst nur die Identifikationskennung gespeichert werden, ohne dass auf weitere Informationen zu dem Betriebselement beim Betrieb der Vorrichtung verzichtet werden müsste.

Alternativ oder ergänzend kann bei dem Verfahren gemäß dem ersten und/oder zweiten Aspekt auch vorgesehen sein, dass das Verfahren aufweist, dass (i) das Betriebselement basierend auf dem ersten und/oder dritten Datum identifiziert und/oder die Vorrichtung für den Einsatz mit dem Betriebselement eingerichtet wird und/oder (ii) ein Warnsignal erzeugt und/oder ein Betrieb der Vorrichtung verweigert oder beendet wird, wenn das erste und/oder dritte Datum ein Betriebselement repräsentiert, das nicht kompatibel mit der Vorrichtung ist.

Damit kann die Montage falscher Betriebselemente zuverlässig erkannt und Schäden an der Vorrichtung oder gar Verletzungen von Personen vermieden werden.

Beispielsweise können zu dem Betriebselement individuelle Kenndaten, etwa in einem Speicher, gespeichert sein, die anhand des ersten und/oder dritten Datums ermittelt werden können. Es kann dann vorteilhafterweise geprüft werden, ob diese Kenndaten kompatibel mit der Vorrichtung sind. Alternativ oder ergänzend können diese Kenndaten auch ganz oder teilweise dem ersten und/oder zweiten Datum entsprechen.

Beispielsweise können sich die Kenndaten beziehen auf: einen Durchmesser des Betriebselements, eine Steigung des Betriebselements, eine minimale Drehzahl des Betriebselements, eine maximale Drehzahl des Betriebselements, eine Nenn-Austragsleistung des Betriebselements, Informationen zu für das Betriebselement geeigneten und/oder ungeeigneten Schüttgütern und/oder Schüttgüterkategorien, einen Mindest-Füllgrad des Betriebselements und/oder einen Maximal-Füllgrad des Betriebselements.

Die Aufgabe wird durch die Erfindung gemäß einem weiteren Aspekt dadurch gelöst, dass eine Förder-, Mess-, Wäge-, Mahl-, Misch-, Filter-, Sieb-, Trocken- und/oder Dosiervorrichtung, insbesondere für Schüttgut, aufweisend ein austauschbares und/oder bewegbares Betriebselement, insbesondere in Form eines Förder-, Austrags-, Mahl-, Misch-, Filter-, Sieb-, Trocken- und/oder Messorgans, und zumindest eine Kommunikationseinrichtung zum Datenaustausch mit dem Transponder, wobei die Vorrichtung dazu eingerichtet ist, ein Verfahren gemäß den Ansprüchen 1 - 14 auszuführen.

Die Vorrichtung kann optional die Recheneinheit, die Rechenvorrichtung und/oder die Regeleinheit aufweisen.

Alle Merkmale und Optionen, die in Bezug auf den ersten und/oder zweiten Aspekt der Erfindung beschrieben worden sind, können auch hier bei der Vorrichtung und ihren Teilen entsprechend vorgesehen sein, einzeln und in beliebiger Kombination.

Alle Vorteile, die in Bezug auf den ersten und/oder zweiten Aspekt der Erfindung beschrieben worden sind, gelten hier entsprechend. Daher kann auf die vorherigen Ausführungen verwiesen werden.

### Kurze Beschreibung der Zeichnungen

Weitere Merkmale und Vorteile der Erfindung ergeben sich aus der nachfolgenden Beschreibung, in der bevorzugte Ausführungsformen der Erfindung anhand schematischer Zeichnungen erläutert werden.

Dabei zeigen:
- Fig. 1: eine schematische Illustration einer Vorrichtung gemäß dem sechsten Aspekt der Erfindung;
- Fig. 2a: einen Ablaufplan eines Verfahrens gemäß dem ersten Aspekt der Erfindung in einer ersten Variante;
- Fig. 2b: einen Ablaufplan eines Verfahrens gemäß dem ersten Aspekt der Erfindung in einer zweiten Variante;
- Fig. 2c: einen Ablaufplan eines Verfahrens gemäß dem ersten Aspekt der Erfindung in einer dritten Variante;
- Fig. 2d: einen Ablaufplan eines Verfahrens gemäß dem ersten Aspekt der Erfindung in einer vierten Variante;
- Fig. 2e: einen Ablaufplan eines Verfahrens gemäß dem zweiten Aspekt der Erfindung in einer ersten Variante;
- Fig. 2f: einen Ablaufplan eines Verfahrens gemäß dem zweiten Aspekt der Erfindung in einer zweiten Variante;
- Fig. 2g: einen Ablaufplan eines Verfahrens gemäß dem ersten Aspekt der Erfindung in einer fünften Variante;
- Fig. 3: eine Datenstruktur gemäß dem dritten Aspekt der Erfindung;
- Fig. 4: einen Transponder gemäß dem vierten Aspekt der Erfindung; und
- Fig. 5: ein Betriebselement gemäß dem fünften Aspekt der Erfindung.

### Beschreibung der Ausführungsformen

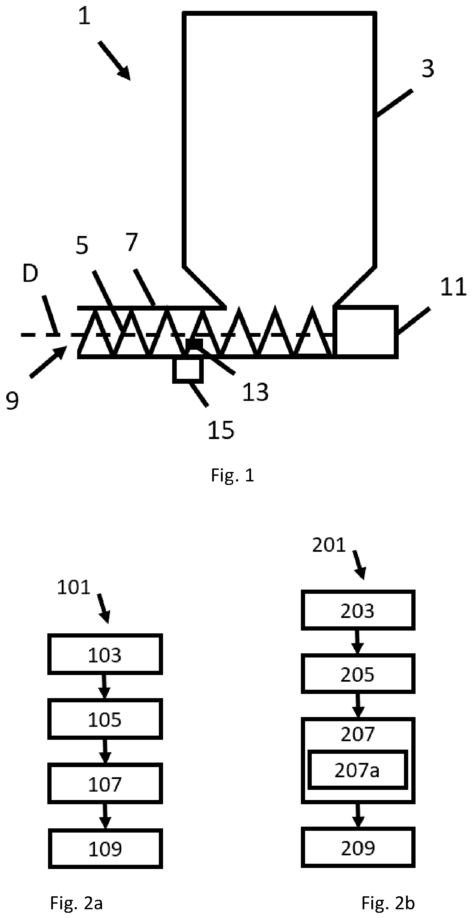

Fig. 1 zeigt eine schematische Illustration einer Dosiervorrichtung 1 gemäß dem sechsten Aspekt der Erfindung.

Die Vorrichtung 1 weist eine Aufnahmeeinheit 3 zum Aufnehmen von Schüttgut auf, die in einen Bereich mündet, in dem ein Betriebselement 5, beispielsweise in Form eines als Schnecke ausgebildeten Förderorgans, der Vorrichtung 1 vorgesehen ist. Das Betriebselement 5 ist bewegbar, nämlich um eine Drehachse D drehbar. Durch die Drehbewegung ist Schüttgut in Richtung eines Abwurfkopfes 7 der Vorrichtung 1 und innerhalb des Abwurfkopfes 7 weiter bis zu einem Auslass 9 mittels des Betriebselements 5 verlagerbar. Über den Auslass 9 kann das Schüttgut die Vorrichtung 1 verlassen, wodurch sich das Gewicht der befüllten Vorrichtung 1 verringert. Die dadurch auftretende Gewichtsdifferenz ist mit einer (in Fig. 1 nicht dargestellten) Wägeeinheit ermittelbar und basierend auf einer kontinuierlichen Ermittlung der Gewichtsdifferenz ist eine Dosierung des Schüttguts durchführbar. Das Betriebselement 5 steht mit einer Antriebseinheit 11 der Vorrichtung 1 in Wirkverbindung. Mit der Antriebseinheit 11 ist eine Drehzahl des Betriebselements 5 einstellbar, regelbar und/oder steuerbar. Je nach Anforderungen ist das Betriebselement 5 auch durch ein anderes Betriebselement austauschbar. Verschiedene Betriebselemente können beispielsweise für unterschiedliche Schüttgüter angepasst sein oder eine unterschiedliche minimale und/oder maximale Austragsleistung haben. Damit verbunden kann beispielsweise das Erfordernis sein, eine auf das Betriebselement abgestimmte Drehfrequenz einzustellen.

Das Betriebselement 5 ist mit einem Transponder 13, etwa einem RFID-Transponder, ausgestattet, der auf einer Oberfläche des Betriebselements vorgesehen ist. Die Vorrichtung 1 weist außerdem eine Kommunikationseinrichtung 15 zum Datenaustausch mit dem Transponder 13 auf. Das heißt, mittels der Kommunikationseinrichtung 15 können Daten von dem Transponder 13 gelesen und Daten auf den Transponder 13 geschrieben werden.

Wenn das Betriebselement 5 mit einer bestimmten Drehzahl gedreht wird, rotiert auch der Transponder 13 mit der jeweiligen Drehzahl. Der Transponder 13 gelangt daher periodisch in den Erfassungsbereich der Kommunikationseinrichtung 15. Dies kann als ein Näherungs-Ereignis erkannt werden.

Mit der Vorrichtung 1 kann ein Verfahren gemäß dem ersten Aspekt sowie dem zweiten Aspekt der Erfindung ausgeführt werden. Nachfolgend werden beispielhafte Ausgestaltungen für solche Verfahren erläutert. Es versteht sich von selbst, dass die beschriebenen Verfahren vorteilhafterweise auch mit anderen Vorrichtungen entsprechend ausführbar sind.

Fig. 2a zeigt ein Ablaufdiagramm eines Verfahrens 101 gemäß dem ersten Aspekt der Erfindung in einer ersten Variante.

In 103 wird, mittels der Kommunikationseinrichtung 15 der Vorrichtung 1, ein auf dem Transponder 13 des Betriebselements 5 gespeichertes erstes Datum ausgelesen. Bei dem ersten Datum handelt es sich um eine Identifikationskennung des Betriebselements 5. Das Betriebselement 5 kann etwa eine Schnecke darstellen, wobei das Betriebselement 5 mit einer definierten Soll-Drehzahl innerhalb der Vorrichtung 1 gedreht werden soll. Beispielsweise kann die Soll-Drehzahl von dem jeweiligen Betriebselement 5 abhängen, so dass die Vorrichtung 1 je nach Betriebselement auch bei unterschiedlichen Soll-Drehzahlen betrieben werden soll oder muss.

In 105 wird für die Soll-Drehzahl als ein spezifischer Betriebsparameter der Vorrichtung 1 vor dem Hintergrund des eingesetzten Betriebselements 5 eine Soll-Drehzahl als spezifischer Wert basierend auf dem ersten Datum, also der ausgelesenen Identifikationskennung, ermittelt. Dazu wird der spezifische Wert beispielsweise aus einer Datenbank abgerufen, in der er samt einer Verknüpfung zu der Identifikationskennung abgelegt ist.

In einer alternativen Ausführungsform könnte der Schritt 105 eingespart oder abgewandelt gestaltet werden, indem das erste Datum anstelle einer Identifikationskennung unmittelbar die Soll-Drehzahl aufweist. Dann könnte das erste Datum direkt als spezifischer Wert verwendet werden.

In 107 wird zumindest teilweise basierend auf dem spezifischen Wert, und damit basierend zumindest auf dem ersten Datum (da der spezifische Wert basierend auf dem ersten Datum ermittelt wurde), ein zweites Datum ermittelt. Das zweite Datum repräsentiert einen Betriebsfähigkeitszustand, beispielsweise in Form eines Verschleißzustandes, des Betriebselements 5 oder ein Maß des Betriebsfähigkeitszustandes bzw. des Verschleißzustandes des Betriebselements 5. Indem der spezifische Wert, mithin die Soll-Drehzahl, bei der Ermittlung des zweiten Datums einbezogen wird, kann eine Drehzahl-abhängige Betriebsfähigkeitsreduzierung, wie ein Drehzahl-abhängiger Verschleiß, bei dem Betriebselement 5 berücksichtigt werden.

In 109 wird, mittels der Kommunikationseinrichtung, das zweite Datum auf dem Transponder 13 gespeichert. Damit liegt auf dem Transponder der aktuelle Betriebsfähigkeitszustand als zweites Datum vor. Damit liegt der aktuelle Betriebsfähigkeitszustand auch direkt mit dem Betriebselement vor. Wird das Betriebselement 5 beispielsweise anschließend in einer anderen Vorrichtung eingesetzt, kann dort anhand des zweiten Datums der Betriebsfähigkeitszustand ermittelt werden, ohne dass ein Informationsaustausch mit der Vorrichtung 1 erfolgen muss.

Fig. 2b zeigt ein Ablaufdiagramm eines Verfahrens 201 gemäß dem ersten Aspekt der Erfindung in einer zweiten Variante. Schritte des Verfahrens 201, die gleich sind zu den Schritten des Verfahrens 101 sind mit gleichen, jedoch um 100 erhöhte Bezugszeichen versehen. Es ist daher ausreichend, wenn lediglich die Unterschiede zwischen den Verfahren 201 und 101 besprochen werden. Für die übrigen Erläuterungen kann auf die vorherigen Ausführungen zum Verfahren 101 verwiesen werden, welche entsprechend auch hier gelten.

Im Gegensatz zu Verfahren 101 weist das Verfahren 201 in 207 bei der Ermittlung des zweiten Datums zusätzlich in 207a auf, das auf dem Transponder 13 zuvor gespeicherte zweite Datum, mittels der Kommunikationseinrichtung 15, auszulesen. Neben dem spezifischen Wert wird dann in 207 auch das zuvor gespeicherte Datum bei der Ermittlung des zweiten Datums berücksichtigt. So kann ein besonders vorteilhafter Betriebsfähigkeitszähler, insbesondere als Verschleißzähler, realisiert werden, der abhängig von der Drehzahl angepasst wird.

Die übrigen Schritte des Verfahrens 201 sind identisch zu denen des Verfahrens 101.

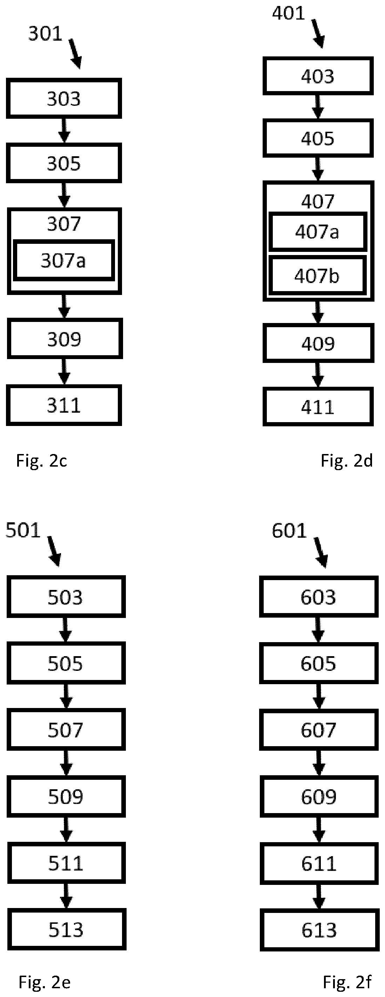

Fig. 2c zeigt ein Ablaufdiagramm eines Verfahrens 301 gemäß dem ersten Aspekt der Erfindung in einer dritten Variante. Schritte des Verfahrens 301, die gleich sind zu den Schritten des Verfahrens 201 sind mit gleichen, jedoch um 100 erhöhte Bezugszeichen versehen. Es ist daher ausreichend, wenn lediglich die Unterschiede zwischen dem Verfahren 301 und dem Verfahren 201 besprochen werden. Für die übrigen Erläuterungen kann auf die vorherigen Ausführungen zu den Verfahren 101 und 201 verwiesen werden, welche entsprechend auch hier gelten.

Im Gegensatz zu dem Verfahren 201 weist das Verfahren 301 zusätzlich in 311 auf, den spezifischen Betriebsparameter auf den spezifischen Wert einzustellen. Dadurch wird die Soll-Drehzahl nicht nur bei der Ermittlung des Betriebsfähigkeitszustandes berücksichtigt, sondern die Drehzahl des Betriebselements wird auch konkret auf diesen Wert eingestellt.

Die übrigen Schritte des Verfahrens 301 sind identisch zu denen des Verfahrens 201.

Fig. 2d zeigt ein Ablaufdiagramm eines Verfahrens 401 gemäß dem ersten Aspekt der Erfindung in einer vierten Variante. Schritte des Verfahrens 401, die gleich sind zu den Schritten des Verfahrens 301 sind mit gleichen, jedoch um 100 erhöhte Bezugszeichen versehen. Es ist daher ausreichend, wenn lediglich die Unterschiede zwischen dem Verfahren 401 und dem Verfahren 301 besprochen werden. Für die übrigen Erläuterungen kann auf die vorherigen Ausführungen zu den Verfahren 101, 201 und 301 verwiesen werden, welche entsprechend auch hier gelten.

Im Gegensatz zu dem Verfahren 301 weist das Verfahren 401 zusätzlich in 407b auf, dass Informationen zu dem Schüttgut bereitgestellt werden. Neben dem spezifischen Wert und dem zuvor gespeicherte zweite Datum wird dann bei der Ermittlung des zweiten Datums in 407 auch das konkrete Schüttgut anhand der jeweiligen Information berücksichtigt. Diese Information kann beispielsweise eine Dichte oder ein Fließverhalten des Schüttguts sein. Indem diese Information bei der Ermittlung der Betriebsfähigkeit, wie des Verschleißes, berücksichtigt wird, kann beispielsweise die abrasive Wirkung des Schüttguts auf das Betriebselement einbezogen werden.

Die übrigen Schritte des Verfahrens 401 sind identisch zu denen des Verfahrens 301.

Bei den Verfahren 101-401 kann vorteilhafterweise jeweils vorgesehen sein, dass das in 107, 207, 307 und 407 ermittelte zweite Datum bei Beendigung des Betriebs der Vorrichtung auf dem Transponder 13 gespeichert wird. Alternativ oder ergänzend kann das zweite Datum auch wiederholt ermittelt und entsprechend oft auf dem Transponder 13 gespeichert werden. Dadurch kann ferner vorteilhafterweise auch eine Betriebsintervalldauer der Vorrichtung 1 bei der Ermittlung eines jeden zweiten Datums berücksichtigt werden, da der Betriebsfähigkeitszähler, insbesondere als Verschleißzähler, auch in Abhängigkeit der Betriebsdauer angepasst wird. Diese Betriebsintervalldauer entspricht praktischerweise gerade dem zeitlichen Abstand zwischen zwei aufeinanderfolgende Ermittlungen des zweiten Datums. So kann neben einer Drehzahl-Abhängigkeit auch eine Abhängigkeit der Betriebsdauer bei der Ermittlung der Betriebsfähigkeit, wie insbesondere des Verschleißes, oder eines Maßes dafür einbezogen werden.

Fig. 2e zeigt ein Ablaufdiagramm eines Verfahrens 501 gemäß dem zweiten Aspekt der Erfindung in einer ersten Variante.

In 503 wird, mittels der Kommunikationseinrichtung 15 der Vorrichtung 1, ein auf einem Transponder 13 des Betriebselements 5 gespeichertes drittes Datum ausgelesen. Bei dem ersten Datum handelt es sich um eine Identifikationskennung des Betriebselements 5.

Das Betriebselement 5 führt eine Drehbewegung aus. Das Betriebselement 5 kann etwa eine Schnecke darstellen, wobei das Betriebselement 5 beispielsweise mit einer definierten Soll-Drehzahl innerhalb der Vorrichtung 1 gedreht werden soll. Beispielsweise kann die Soll-Drehzahl von dem jeweiligen Betriebselement 5 abhängen, so dass die Vorrichtung 1 je nach Betriebselement auch bei unterschiedlichen Soll-Drehzahlen betrieben werden soll oder muss.

In 505 wird basierend auf dem dritten Datum eine spezifische Spezifikation der Drehzahl des Betriebselements ermittelt. Anhand der spezifischen Spezifikation können zulässige Werte der Drehzahl des Betriebselements 5 ermittelt werden. Beispielsweise kann die spezifische Spezifikation gerade der Soll-Drehzahl entsprechen. Alternativ kann die spezifische Spezifikation auch eine obere und/oder untere Grenze der zulässigen Drehzahl darstellen. Vorliegend beschreibt die spezifische Spezifikation die Soll-Drehzahl des Betriebselements 5 in der Vorrichtung 1.

In einer alternativen Ausführungsform könnte der Schritt 505 eingespart oder abgewandelt gestaltet werden, indem das dritte Datum anstelle einer Identifikationskennung unmittelbar die Soll-Drehzahl aufweist. Dann könnte das dritte Datum direkt als spezifische Spezifikation verwendet werden.

In 507 wird, mittels der Kommunikationseinrichtung 15, eine Frequenz der Bewegung, mithin eine Bewegungsfrequenz und vorliegend eine Drehzahl, des Betriebselements 5 ermittelt.

Der Transponder 13 dreht sich dabei mit dem eine Drehung ausführenden Betriebselement 5 mit und wird nach jeweils einer Umdrehung von der Kommunikationseinrichtung 15 erfasst. Das Zeitintervall zwischen zwei aufeinanderfolgenden Erfassungen ermöglicht beispielsweise in 507 das Ermitteln der Bewegungsfrequenz in Form einer Drehzahl.

In 509 wird ein Vergleich zwischen der ermittelten Bewegungsfrequenz, also insbesondere der momentanen Drehzahl, und der spezifischen Spezifikation der Bewegungsfrequenz durchgeführt. Durch den Vergleich kann beispielsweise die Aussage getroffen werden, ob die in 507 ermittelte Drehzahl der für das Betriebselement 5 vorgeschriebenen Soll-Drehzahl entspricht, oder ob diese zu hoch oder zu gering ist.

In 511 wird ein Kontrollsignal erzeugt, welches indikativ ist für ein Ergebnis des Vergleichs.

In 513 wird eine Regelung der Drehzahl des Betriebselements 5 basierend auf dem Kontrollsignal durchgeführt. Ist also beispielsweise die aktuelle Drehzahl des Betriebselements 5 größer als die Soll-Drehzahl, kann die Drehzahl mittels der Antriebseinheit 11 der Vorrichtung 1 durch eine Verringerung angepasst werden, und vice versa. Optional könnte auch noch ein Warnsignal erzeugt werden, wenn die Drehzahl des Betriebselements 5 nicht der Soll-Drehzahl entspricht.

Fig. 2f zeigt ein Ablaufdiagramm eines Verfahrens 601 gemäß dem zweiten Aspekt der Erfindung in einer zweiten Variante. Schritte des Verfahrens 601, die gleich sind zu den Schritten des Verfahrens 501 sind mit gleichen, jedoch um 100 erhöhte Bezugszeichen versehen. Es ist daher ausreichend, wenn lediglich die Unterschiede zwischen den Verfahren 601 und 501 besprochen werden. Für die übrigen Erläuterungen kann auf die vorherigen Ausführungen zum Verfahren 501 verwiesen werden, welche entsprechend auch hier gelten.

In 605 wird wieder, mittels der Kommunikationseinrichtung 15, eine Frequenz der Bewegung, mithin eine Bewegungsfrequenz und vorliegend eine Drehzahl, des Betriebselements 5 ermittelt.

Allerdings weist der Transponder 13 vorliegend einen Drehzahlsensor auf und empfängt Messdaten von diesem Sensor. Der Drehzahlsensor stellt damit dem Transponder Messdaten betreffend die Bewegungsfrequenz des Betriebselements 5 bereit.

In Abwandlung zu 505 in Verfahren 501 werden in 605 des Verfahrens 601 dann die Messdaten, mittels der Kommunikationseinrichtung 15, aus dem Transponder 13 ausgelesen. Im Fall des Verfahrens 601 liegt der Ermittlung der Bewegungsfrequenz in Form der Drehzahl damit nicht das Intervall, mit dem der Transponder 13 von der Kommunikationseinrichtung 15 erfasst wird, zugrunde. Stattdessen liest die Kommunikationseinrichtung 15 die Drehzahl vorliegend direkt aus dem Transponder 13 aus.

Beiden Verfahrens-Varianten 501 und 601 ist aber gemein, dass das dritte Datum eine Referenz zur Beurteilung der ermittelten Bewegungsfrequenz liefert.

Die übrigen Schritte des Verfahrens 601 sind identisch zu denen des Verfahrens 501.

Optional könnten Messdaten weiterer Sensoren in dem Transponder 13 gespeichert und dann mittels der Kommunikationseinrichtung 15 aus dem Transponder ausgelesen werden. So könnten zusätzliche Informationen zu etwa physikalischen Größen der Vorrichtung 1 und ihren Teilen, wie dem Betriebselement 5, und der Umgebung, einschließlich des Schüttguts, bereitgestellt werden. Solche Messgrößen könnten die Temperatur von Betriebselement 5 und/oder Schüttgut oder einer Schwingung des Betriebselements 5 betreffen.

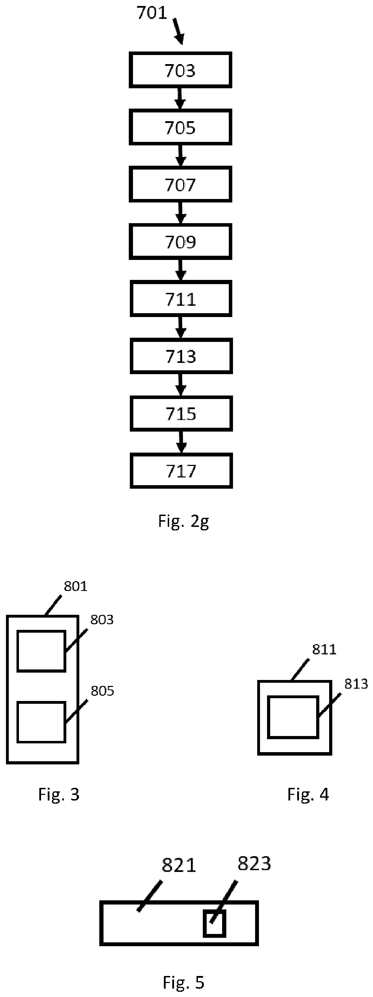

Fig. 2g zeigt ein Ablaufdiagramm eines Verfahrens 701 gemäß dem ersten Aspekt der Erfindung in einer fünften Variante.

Das Verfahren 701 stellt eine Kombination von dem in Bezug auf Fig. 2a besprochenen Verfahren 101 und dem in Bezug auf Fig. 2e besprochenen Verfahren 501 dar. Es wird dabei folglich sowohl eine Drehzahl-Regelung vorgenommen als auch eine Drehzahl-abhängige Betriebsfähigkeitsermittlung, insbesondere als Verschleißermittlung, durchgeführt.

Die Schritte 703-709 des Verfahrens 701 entsprechen den Schritten 103-109 des Verfahrens 101. In Klammern ist zur schnelleren Orientierung die jeweilige Zuordnung angegeben. Dabei wird, wie oben beschrieben wurde, im Schritt 703 (103) ein erstes Datum aus dem Transponder 13 ausgelesen und in 705 (105) wird die Soll-Drehzahl als spezifischer Wert basierend auf dem ersten Datum ermittelt, um darauf basierend weiter in 707 (107) das zweite Datum zu ermitteln und in 709 (109) das zweite Datum auf dem Transponder zu speichern.

In 711 (entsprechend Schritt 507 des Verfahrens 501) wird die Bewegungsfrequenz des Betriebselements 5 anhand der Erfassungs-Intervalle ermittelt. Die Bewegungsfrequenz könnte alternativ auch wie in Schritt 607 des Verfahrens 601 durch Auslesen von entsprechenden Messdaten eines Drehzahlensensors erfolgen.

In 713 wird, ähnlich wie in Schritt 509 des Verfahrens 501, die ermittelte Bewegungsfrequenz des Betriebselements 5 mit einer spezifischen Spezifikation der Drehzahl des Betriebselements 5 verglichen. Im Gegensatz zum Verfahren 501 wird in 713 allerdings die in 705 als spezifischer Wert ermittelte Soll-Drehzahl in als spezifische Spezifikation der Drehzahl des Betriebselements 5 verwendet.

Schritte 715-717 des Verfahrens 701 entsprechen den Schritten 511-513 des Verfahrens 501 mit dem Ziel einer Regelung der Drehzahl des Betriebselements 5. Das Erzeugen des Kontrollsignals in 715 (511) und das Durchführen einer Regelung der Drehzahl des Betriebselements 5 in 717 (513) erfolgt wieder wie oben beschrieben.

Im Verfahren 701 wird also basierend auf dem ersten Datum die Soll-Drehzahl des Betriebselements 5 ermittelt. Und diese wird dann sowohl für die Ermittlung der Betriebsfähigkeit des Betriebselements 5 als auch für die Regelung der Drehzahl des Betriebselementes 5 verwendet. Somit kann also basierend auf dem ersten Datum die Betriebsfähigkeit, insbesondere der Verschleiß, sehr zuverlässig ermittelt werden, da ebenfalls basierend auf dem ersten Datum die Drehzahl geregelt wird.

Die in Bezug auf Fig. 1 beschriebene Vorrichtung 1 kann beispielsweise jeweils dazu eingerichtet sein, eines der vorstehend erläuterten Verfahren 101, 201, 301, 401, 501, 601 oder 701 auszuführen.

Fig. 3 zeigt eine Datenstruktur 801 gemäß einem nicht beanspruchten Aspekt der Erfindung. Diese weist ein erstes Datum 803 und ein zweites Datum 805 auf. Das erste Datum 803 kann beispielsweise, wie in den vorstehenden Verfahren beschrieben, eine Identifikationskennung eines Betriebselements sein. Das zweite Datum 805 kann beispielsweise, wie in den vorstehenden Verfahren beschrieben, eine Information zu einem Betriebsfähigkeitszustand oder ein Maß dafür des Betriebselements sein.

Fig. 4 zeigt einen Transponder 811 gemäß einem nicht beanspruchten Aspekt der Erfindung. Der Transponder 811 weist eine Datenstruktur 813 auf, bei der es sich um die in Bezug auf Fig. 3 erläuterte Datenstruktur 801 handeln kann.

Fig. 5 zeigt ein Betriebselement 821 gemäß einem nicht beanspruchten Aspekt der Erfindung. Das Betriebselement 821 weist einen Transponder 823 auf, bei dem es sich um den in Bezug auf Fig. 4 erläuterten Transponder 811 handeln kann. Das Betriebselement 821 könnte eine Schnecke sein, wie sie beispielsweise bei der in Bezug auf Fig. 1 erläuterten Vorrichtung 1 eingesetzt ist.

Die in der vorangehenden Beschreibung, in den Zeichnungen und in den Ansprüchen offenbarten Merkmale können sowohl einzeln als auch in beliebiger Kombination wesentlich für die Erfindung in ihren verschiedenen Ausführungsformen sein.

### Bezugszeichenliste

- 1: Vorrichtung
- 3: Aufnahmeeinheit
- 5: Betriebselement
- 7: Abwurfkopf
- 9: Auslass
- 11: Antriebseinheit
- 13: Transponder
- 15: Kommunikationseinrichtung
- 101: Ablaufdiagramm
- 103: Auslesen eines ersten Datums aus dem Transponder
- 105: Ermitteln eines spezifischen Wertes eines spezifischen Betriebsparameters
- 107: Ermitteln eines zweiten Datums basierend auf dem ersten Datum
- 109: Speichern des zweiten Datums auf dem Transponder
- 201: Ablaufdiagramm
- 203: Auslesen eines ersten Datums aus dem Transponder
- 205: Ermitteln eines spezifischen Wertes eines spezifischen Betriebsparameters
- 207a: Auslesen des zuvor auf dem Transponder gespeicherten zweiten Datums
- 207: Ermitteln eines zweiten Datums basierend auf dem ersten Datum und dem zuvor auf dem Transponder gespeicherten zweiten Datum
- 209: Speichern des zweiten Datums auf dem Transponder
- 301: Ablaufdiagramm
- 303: Auslesen eines ersten Datums aus dem Transponder
- 305: Ermitteln eines spezifischen Wertes eines spezifischen Betriebsparameters
- 307a: Auslesen des zuvor auf dem Transponder gespeicherten zweiten Datums
- 307: Ermitteln eines zweiten Datums basierend auf dem ersten Datum und dem zuvor auf dem Transponder gespeicherten zweiten Datum
- 309: Speichern des zweiten Datums auf dem Transponder
- 311: Einstellen des spezifischen Betriebsparameters auf den spezifischen Wert
- 401: Ablaufdiagramm
- 403: Auslesen eines ersten Datums aus dem Transponder
- 405: Ermitteln eines spezifischen Wertes eines spezifischen Betriebsparameters
- 407a: Auslesen des zuvor auf dem Transponder gespeicherten zweiten Datums
- 407b: Bereitstellen von Informationen zu dem Schüttgut
- 407: Ermitteln eines zweiten Datums basierend auf dem ersten Datum, dem zuvor auf dem Transponder gespeicherten zweiten Datum und der Information zum Schüttgut
- 409: Speichern des zweiten Datums auf dem Transponder
- 411: Einstellen des spezifischen Betriebsparameters auf den spezifischen Wert
- 501: Ablaufdiagramm
- 503: Auslesen eines dritten Datums
- 505: Ermitteln einer spezifischen Spezifikation der Bewegungsfrequenz
- 507: Ermitteln einer Frequenz der Bewegung des Betriebselements
- 509: Durchführen eines Vergleichs zwischen der Bewegungsfrequenz und der spezifischen Spezifikation
- 511: Erzeugen eines Kontrollsignals
- 513: Durchführen einer Regelung der Drehzahl des Betriebselements
- 601: Ablaufdiagramm
- 603: Auslesen eines dritten Datums
- 605: Ermitteln einer spezifischen Spezifikation der Bewegungsfrequenz
- 607: Ermitteln einer Frequenz der Bewegung des Betriebselements
- 609: Durchführen eines Vergleichs zwischen der Bewegungsfrequenz und der spezifischen Spezifikation
- 611: Erzeugen eines Kontrollsignals
- 613: Durchführen einer Regelung der Drehzahl des Betriebselements
- 701: Ablaufdiagramm
- 703: Auslesen eines ersten Datums aus dem Transponder
- 705: Ermitteln eines spezifischen Wertes eines spezifischen Betriebsparameters
- 707: Ermitteln eines zweiten Datums basierend auf dem ersten Datum
- 709: Speichern des zweiten Datums auf dem Transponder
- 711: Ermitteln einer Frequenz der Bewegung des Betriebselements
- 713: Durchführen eines Vergleichs zwischen der Bewegungsfrequenz und der spezifischen Spezifikation
- 715: Erzeugen eines Kontrollsignals
- 717: Durchführen einer Regelung der Drehzahl des Betriebselements
- 801: Datenstruktur
- 803: erstes Datum
- 805: zweites Datum
- 811: Transponder
- 813: Datenstruktur
- 821: Betriebselement
- 823: Transponder
- D: Drehachse

## Patentansprüche

1. Verfahren zum Einrichten und/oder Betreiben einer Förder-, Mess-, Wäge-, Mahl-, Misch-, Filter-, Sieb-, Trocken- und/oder Dosiervorrichtung für Schüttgut,
- die zumindest ein austauschbares, eine Bewegung ausführendes Betriebselement, in Form eines Förder-, Austrags-, Mahl-, Misch-, Filter-, Sieb-, Trocken- und/oder Messorgans, mit einem Transponder und
- eine Kommunikationseinrichtung zum Datenaustausch mit dem Transponder aufweist,
- wobei mittels der Kommunikationseinrichtung,
- ein auf dem Transponder gespeichertes erstes Datum ausgelesen wird (103, 203, 303, 403, 703),
- ein zweites Datum, das einen Betriebsfähigkeitszustand oder ein Maß dafür des Betriebselements repräsentiert, basierend auf dem ersten Datum ermittelt (107, 207, 307, 407, 707) und mittels der Kommunikationseinrichtung auf dem Transponder gespeichert (109, 209, 309, 409, 709) wird, **dadurch gekennzeichnet, dass**
- mittels der Kommunikationseinrichtung eine Frequenz der Bewegung des Betriebselements ermittelt und ein drittes Datum ausgelesen wird (507, 607, 711), wobei das dritte Datum eine spezifische Spezifikation der Bewegungsfrequenz des Betriebselements ist oder eine spezifische Spezifikation basierend auf dem dritten Datum ermittelt wird (505, 605),
- ein Vergleich zwischen der ermittelten Bewegungsfrequenz und der spezifischen Spezifikation durchgeführt (509, 609, 713) und
- ein Kontrollsignal, das indikativ ist für ein Ergebnis des Vergleichs, erzeugt (511, 611, 715) wird.

2. Verfahren nach Anspruch 1, wobei zumindest ein Betriebsparameter der Vorrichtung ein spezifischer Betriebsparameter ist und ein während einem Betrieb der Vorrichtung einzustellender Wert des spezifischen Betriebsparameters als ein spezifischer Wert zumindest teilweise basierend auf dem ersten Datum ermittelt wird (105, 205, 305, 405, 705) oder das erste Datum als ein solcher spezifischer Wert des spezifischen Betriebsparameters verwendet wird,
und wobei vorzugsweise (i) der spezifische Betriebsparameter der Vorrichtung auf den spezifischen Wert eingestellt wird (311, 411), und/oder (ii) das zweite Datum zumindest teilweise basierend auf dem spezifischen Wert und/oder dem spezifischen Betriebsparameter ermittelt wird.

3. Verfahren nach Anspruch 2, wobei der spezifische Wert zumindest teilweise auch basierend auf einem zuvor, insbesondere als letztes, auf dem Transponder gespeicherten zweiten Datum ermittelt wird, wobei vorzugsweise basierend auf dem zuvor auf dem Transponder gespeicherten zweiten Datum ein, insbesondere oberer, Grenzwert des Wertebereichs des spezifischen Wertes ermittelt und bei der Ermittlung des spezifischen Wertes berücksichtigt wird.

4. Verfahren nach einem der Ansprüche 2 bis 3, wobei der spezifische Betriebsparameter eine Drehzahl des Betriebselements, eine, Austragsleistung des Betriebselements, ein Durchmesser des Betriebselements, eine Steigung des Betriebselements, eine Kennlinie des Betriebselements eine Nennförderstärke des Betriebselements, eine Betriebstemperatur des Betriebselements und/oder eine maximale Beschleunigung in 3-Achsen des Betriebselements ist.

5. Verfahren nach einem der vorangehenden Ansprüche, wobei das auf dem Transponder zuvor gespeicherte zweite Datum, mittels der Kommunikationseinrichtung, ausgelesen wird (207a, 307a, 407a).

6. Verfahren nach einem der vorangehenden Ansprüche, wobei das zweite Datum basierend auch auf dem zuvor auf dem Transponder gespeicherte zweite Datum ermittelt wird (207, 307, 407.

7. Verfahren nach einem der vorangehenden Ansprüche, wobei basierend auf dem Kontrollsignal eine Regelung der Bewegung, insbesondere der Bewegungsfrequenz, des Betriebselements durchgeführt, insbesondere die Bewegungsfrequenz nach oben begrenzt und/oder auf einem definierten oder definierbaren Wert gehalten, wird (513, 613, 717).

8. Verfahren nach einem der vorangehenden Ansprüche, wobei (i) die Bewegung des Betriebselements eine Drehbewegung des Betriebselements um eine Drehachse ist und vorzugsweise die Bewegungsfrequenz eine Drehzahl ist, (ii) die Bewegung des Betriebselements eine Umlaufbewegung des Betriebselements ist und vorzugsweise die Bewegungsfrequenz eine Umlauffrequenz ist und/oder (iii) die Bewegung des Betriebselements eine lineare Bewegung, insbesondere eine, vorzugsweise horizontale oder vertikale, Hin- und Herbewegung, des Betriebselements ist.

9. Verfahren nach einem der vorangehenden Ansprüche, wobei, während das Betriebselement die Bewegung ausführt, der Transponder, mittels der Kommunikationseinrichtung, wiederholt, insbesondere periodisch, erfasst wird und basierend auf dem Erfassungsintervall die Bewegungsfrequenz ermittelt wird.

10. Verfahren nach einem der vorangehenden Ansprüche, wobei, mittels der Kommunikationseinrichtung, die Bewegungsfrequenz des Betriebselements durch ein Auslesen von die Bewegungsfrequenz des Betriebselements betreffenden Sensordaten aus dem Transponder ermittelt wird.

11. Verfahren nach einem der vorangehenden Ansprüche, wobei (i) das zweite Datum zumindest teilweise basierend auf der ermittelten Bewegungsfrequenz ermittelt wird, (ii) das dritte Datum identisch zu dem ersten Datum ist, und wobei vorzugsweise der spezifische Wert als spezifische Spezifikation verwendet wird, und/oder (iii) die spezifische Spezifikation zulässige Werte der Bewegungsfrequenz beschreibt oder ermittelbar macht, insbesondere einen Soll-Wert der Bewegungsfrequenz, einen Maximalwert der Bewegungsfrequenz, einen Minimalwert der Bewegungsfrequenz und/oder einen zulässigen Wertebereich der Bewegungsfrequenz beschreibt oder ist.

12. Verfahren nach einem der vorangehenden Ansprüche, wobei der Transponder Messdaten von zumindest einem Sensor empfängt oder der Transponder den zumindest einen Sensor aufweist, und wobei vorzugsweise
(i) ein erster Sensor einen Drehzahlsensor, einen Positionssensor, einen Gyroskopsensor, ein Magnetometer, einen Neigungssensor, einen Temperatursensor und/oder einen Beschleunigungssensor aufweist oder darstellt und der erste Sensor die Messdaten betreffend die Bewegungsfrequenz dem Transponder bereitstellt;
und/oder
(ii) die Messdaten, mittels der Kommunikationseinrichtung, aus dem Transponder ausgelesen werden, und vorzugsweise zumindest ein erster Teil der Messdaten, insbesondere die Messdaten des ersten und/oder zumindest eines zweiten Sensors, bei der Ermittlung des spezifischen Wertes und/oder des zweiten Datums einbezogen werden.

13. Verfahren nach einem der vorangehenden Ansprüche, wobei das Verfahren aufweist, dass zumindest eine Information zu dem Schüttgut bereitgestellt wird (407b) und vorzugsweise, dass das zweite Datum, der spezifische Wert und/oder die spezifische Spezifikation zumindest teilweise auch in Abhängigkeit der bereitgestellten Information ermittelt wird (407).

14. Verfahren nach einem der vorangehenden Ansprüche, wobei das erste Datum eine Identifikationskennung des Betriebselements, eine Soll-Bewegungsfrequenz, insbesondere eine Soll-Drehzahl, des Betriebselements und/oder eine Spezifikation des spezifischen Betriebsparameters aufweist oder darstellt.

15. Förder-, Mess-, Wäge-, Mahl-, Misch-, Filter-, Sieb-, Trocken- und/oder Dosiervorrichtung (1) aufweisend ein austauschbares und/oder bewegbares Betriebselement (5), in Form eines Förder-, Austrags-, Mahl-, Misch-, Filter-, Sieb-, Trocken- und/oder Messorgans mit zumindest einem Transponder (13) und zumindest eine Kommunikationseinrichtung (15) zum Datenaustausch mit dem Transponder (13), wobei die Vorrichtung (1) dazu eingerichtet ist, ein Verfahren nach einem der Ansprüche 1 bis 14 auszuführen.

## Claims

1. Method for setting up and/or operating a conveying device, measuring device, weighing device, grinding device, mixing device, filtering device, sieving device, drying device and/or dosing device for bulk material,
- which comprises at least one exchangeable operating element performing a movement, in the form of a conveying member, discharging member, grinding member, mixing member, filtering member, sieving member, drying member and/or measuring member, with a transponder and
- a communication device for data exchange with the transponder,
- wherein by means of the communication device,
- a first data stored on the transponder is read out (103, 203, 303, 403, 703),
- a second data, which represents an operability state or a measure thereof of the operating element, is determined (107, 207, 307, 407, 707) based on the first data and stored on the transponder by means of the communication device (109, 209, 309, 409, 709), **characterized in that**
- by means of the communication device a frequency of the movement of the operating element is determined and a third data is read out (507, 607, 711), wherein the third data is a specific specification of the movement frequency of the operating element or a specific specification is determined based on the third data (505, 605),
- a comparison between the determined movement frequency and the specific specification is performed (509, 609, 713) and
- a control signal, which is indicative for a result of the comparison, is generated (511, 611, 715).

2. Method according to claim 1, wherein at least one operating parameter of the device is a specific operating parameter and a value of the specific operating parameter to be set during an operation of the device is determined as a specific value at least partially based on the first data (105, 205, 305, 405, 705) or the first data is used as such a specific value of the specific operating parameter, and wherein preferably (i) the specific operating parameter of the device is set to the specific value (311, 411), and/or (ii) the second data is determined at least partially based on the specific value and/or the specific operating parameter.

3. Method according to claim 2, wherein the specific value is at least partially also determined based on a previously, in particular last, stored second data on the transponder, wherein preferably based on the previously stored second data on the transponder a, in particular upper, limit value of the value range of the specific value is determined and taken into account in the determination of the specific value.

4. Method according to any one of claims 2 to 3, wherein the specific operating parameter is a rotational speed of the operating element, a discharge capacity of the operating element, a diameter of the operating element, a pitch of the operating element, a characteristic curve of the operating element, a nominal conveying capacity of the operating element, an operating temperature of the operating element and/or a maximum acceleration in 3-axes of the operating element.

5. Method according to any one of the preceding claims, wherein the previously stored second data on the transponder is read out by means of the communication device (207a, 307a, 407a).

6. Method according to any one of the preceding claims, wherein the second data is also determined based on the previously stored second data on the transponder (207, 307, 407).

7. Method according to any one of the preceding claims, wherein based on the control signal a regulation of the movement, in particular the movement frequency, of the operating element is performed, in particular the movement frequency is limited upwards and/or kept at a defined or definable value (513, 613, 717).

8. Method according to any one of the preceding claims, wherein (i) the movement of the operating element is a rotational movement of the operating element about an axis of rotation and preferably the movement frequency is a rotational speed, (ii) the movement of the operating element is a revolving movement of the operating element and preferably the movement frequency is a revolution frequency and/or (iii) the movement of the operating element is a linear movement, in particular a, preferably horizontal or vertical, reciprocating movement, of the operating element.

9. Method according to any one of the preceding claims, wherein, while the operating element performs the movement, the transponder is repeatedly, in particular periodically, detected by means of the communication device and based on the detection interval the movement frequency is determined.

10. Method according to any one of the preceding claims, wherein, by means of the communication device, the movement frequency of the operating element is determined by a reading out of sensor data relating to the movement frequency of the operating element from the transponder.

11. Method according to any one of the preceding claims, wherein (i) the second data is at least partially determined based on the determined movement frequency, (ii) the third data is identical to the first data, and wherein preferably the specific value is used as specific specification, and/or (iii) the specific specification describes or makes determinable permissible values of the movement frequency, in particular describes or is a target value of the movement frequency, a maximum value of the movement frequency, a minimum value of the movement frequency and/or a permissible value range of the movement frequency.

12. Method according to any one of the preceding claims, wherein the transponder receives measurement data from at least one sensor or the transponder comprises the at least one sensor, and wherein preferably
(i) a first sensor comprises or represents a rotational speed sensor, a position sensor, a gyroscope sensor, a magnetometer, an inclination sensor, a temperature sensor and/or an acceleration sensor and the first sensor provides the measurement data relating to the movement frequency to the transponder;
and/or
(ii) the measurement data are read out from the transponder by means of the communication device, and preferably at least a first part of the measurement data, in particular the measurement data of the first and/or at least one second sensor, are included in the determination of the specific value and/or the second data.

13. Method according to any one of the preceding claims, wherein the method comprises that at least one information about the bulk material is provided (407b) and preferably that the second data, the specific value and/or the specific specification is at least partially also determined depending on the provided information (407).

14. Method according to any one of the preceding claims, wherein the first data comprises or represents an identification code of the operating element, a target movement frequency, in particular a target rotational speed, of the operating element and/or a specification of the specific operating parameter.

15. Conveying device, measuring device, weighing device, grinding device, mixing device, filtering device, sieving device, drying device and/or dosing device (1) comprising an exchangeable and/or movable operating element (5), in the form of a conveying member, discharging member, grinding member, mixing member, filtering member, sieving member, drying member and/or measuring member with at least one transponder (13) and at least one communication device (15) for data exchange with the transponder (13), wherein the device (1) is configured to perform a method according to any one of claims 1 to 14.

## Revendications

1. Procédé pour la mise en place et/ou le fonctionnement d'un dispositif de convoyage, de mesure, de pesée, de broyage, de mélange, de filtration,
de tamisage, de séchage et/ou de dosage pour produit en vrac,
- qui présente au moins un élément fonctionnel interchangeable, exécutant un mouvement, sous la forme
d'un organe de convoyage, d'extraction, de broyage, de mélange, de filtration, de tamisage, de séchage et/ou de mesure, avec un transpondeur et
- un dispositif de communication pour l'échange de données avec le transpondeur,
- dans lequel, au moyen du dispositif de communication,
- une première donnée enregistrée sur le transpondeur est lue (103, 203, 303, 403, 703),
- une seconde donnée, qui représente un état d'aptitude au fonctionnement ou une mesure de celui-ci de l'élément fonctionnel, est déterminée (107, 207, 307, 407, 707) sur la base de la première donnée et enregistrée sur le transpondeur au moyen du dispositif de communication (109, 209, 309, 409, 709), **caractérisé en ce que**
- au moyen du dispositif de communication, une fréquence du mouvement de l'élément fonctionnel est déterminée et une troisième donnée est lue (507, 607, 711), la troisième donnée étant une spécification spécifique de la fréquence de mouvement de l'élément fonctionnel ou une spécification spécifique étant déterminée sur la base de la troisième donnée (505, 605),
- une comparaison entre la fréquence de mouvement déterminée et la spécification spécifique est effectuée (509, 609, 713) et
- un signal de contrôle, qui est indicatif d'un résultat de la comparaison, est généré (511, 611, 715).

2. Procédé selon la revendication 1, dans lequel au moins un paramètre de fonctionnement du dispositif est un paramètre de fonctionnement spécifique et une valeur du paramètre de fonctionnement spécifique à régler pendant un fonctionnement du dispositif est déterminée en tant que valeur spécifique au moins partiellement sur la base de la première donnée (105, 205, 305, 405, 705) ou la première donnée est utilisée en tant que telle valeur spécifique du paramètre de fonctionnement spécifique,
et dans lequel, de préférence, (i) le paramètre de fonctionnement spécifique du dispositif est réglé sur la valeur spécifique (311, 411), et/ou (ii) la seconde donnée est déterminée au moins partiellement sur la base de la valeur spécifique et/ou du paramètre de fonctionnement spécifique.

3. Procédé selon la revendication 2, dans lequel la valeur spécifique est également déterminée au moins partiellement sur la base d'une seconde donnée précédemment, en particulier en dernier, enregistrée sur le transpondeur, dans lequel, de préférence, sur la base de la seconde donnée précédemment enregistrée sur le transpondeur, une valeur limite, en particulier supérieure, de la plage de valeurs de la valeur spécifique est déterminée et prise en compte lors de la détermination de la valeur spécifique.

4. Procédé selon l'une des revendications 2 à 3, dans lequel le paramètre de fonctionnement spécifique est une vitesse de rotation de l'élément fonctionnel, une capacité d'extraction de l'élément fonctionnel, un diamètre de l'élément fonctionnel, une pente de l'élément fonctionnel, une courbe caractéristique de l'élément fonctionnel, une capacité nominale de convoyage de l'élément fonctionnel, une température de fonctionnement de l'élément fonctionnel et/ou une accélération maximale sur 3 axes de l'élément fonctionnel.

5. Procédé selon l'une des revendications précédentes, dans lequel la seconde donnée précédemment enregistrée sur le transpondeur est lue au moyen du dispositif de communication (207a, 307a, 407a).

6. Procédé selon l'une des revendications précédentes, dans lequel la seconde donnée est également déterminée sur la base de la seconde donnée précédemment enregistrée sur le transpondeur (207, 307, 407).

7. Procédé selon l'une des revendications précédentes, dans lequel, sur la base du signal de contrôle, une régulation du mouvement, en particulier de la fréquence de mouvement, de l'élément fonctionnel est effectuée, en particulier la fréquence de mouvement est limitée vers le haut et/ou maintenue à une valeur définie ou définissable (513, 613, 717).

8. Procédé selon l'une des revendications précédentes, dans lequel (i) le mouvement de l'élément fonctionnel est un mouvement de rotation de l'élément fonctionnel autour d'un axe de rotation et, de préférence, la fréquence de mouvement est une vitesse de rotation, (ii) le mouvement de l'élément fonctionnel est un mouvement de révolution de l'élément fonctionnel et, de préférence, la fréquence de mouvement est une fréquence de révolution et/ou (iii) le mouvement de l'élément fonctionnel est un mouvement linéaire, en particulier un mouvement alternatif, de préférence horizontal ou vertical, de l'élément fonctionnel.

9. Procédé selon l'une des revendications précédentes, dans lequel, pendant que l'élément fonctionnel exécute le mouvement, le transpondeur est détecté de manière répétée, en particulier périodiquement, au moyen du dispositif de communication, et la fréquence de mouvement est déterminée sur la base de l'intervalle de détection.

10. Procédé selon l'une des revendications précédentes, dans lequel, au moyen du dispositif de communication, la fréquence de mouvement de l'élément fonctionnel est déterminée par une lecture de données de capteur concernant la fréquence de mouvement de l'élément fonctionnel à partir du transpondeur.

11. Procédé selon l'une des revendications précédentes, dans lequel (i) la seconde donnée est déterminée au moins partiellement sur la base de la fréquence de mouvement déterminée, (ii) la troisième donnée est identique à la première donnée, et, de préférence, la valeur spécifique est utilisée en tant que spécification spécifique, et/ou (iii) la spécification spécifique décrit ou permet de déterminer des valeurs admissibles de la fréquence de mouvement, en particulier une valeur de consigne de la fréquence de mouvement, une valeur maximale de la fréquence de mouvement, une valeur minimale de la fréquence de mouvement et/ou une plage de valeurs admissibles de la fréquence de mouvement décrit ou est.

12. Procédé selon l'une des revendications précédentes, dans lequel le transpondeur reçoit des données de mesure d'au moins un capteur ou le transpondeur présente ledit au moins un capteur, et dans lequel, de préférence,
(i) un premier capteur présente ou représente un capteur de vitesse de rotation, un capteur de position, un capteur gyroscopique, un magnétomètre, un capteur d'inclinaison, un capteur de température et/ou un capteur d'accélération et le premier capteur fournit au transpondeur les données de mesure concernant la fréquence de mouvement ;
et/ou
(ii) les données de mesure sont lues à partir du transpondeur au moyen du dispositif de communication, et, de préférence, au moins une première partie des données de mesure, en particulier les données de mesure du premier et/ou d'au moins un second capteur, sont prises en compte lors de la détermination de la valeur spécifique et/ou de la seconde donnée.

13. Procédé selon l'une des revendications précédentes, dans lequel le procédé comprend que au moins une information relative au produit en vrac est fournie (407b) et, de préférence, que la seconde donnée, la valeur spécifique et/ou la spécification spécifique est également déterminée au moins partiellement en fonction de l'information fournie (407).

14. Procédé selon l'une des revendications précédentes, dans lequel la première donnée présente ou représente un identifiant de l'élément fonctionnel, une fréquence de mouvement de consigne, en particulier une vitesse de rotation de consigne, de l'élément fonctionnel et/ou une spécification du paramètre de fonctionnement spécifique.

15. Dispositif de convoyage, de mesure, de pesée, de broyage, de mélange, de filtration, de tamisage, de séchage et/ou de dosage (1) comprenant un élément fonctionnel interchangeable et/ou mobile (5), sous la forme d'un organe de convoyage, d'extraction, de broyage, de mélange, de filtration, de tamisage, de séchage et/ou de mesure avec au moins un transpondeur (13) et au moins un dispositif de communication (15) pour l'échange de données avec le transpondeur (13), le dispositif (1) étant conçu pour exécuter un procédé selon l'une des revendications 1 à 14.
